# EUROPEAN PATENT APPLICATION

(11) **EP 4 838 859 A1**
(43) Date of publication of application: **11.11.2026**
(21) Application number: 24923547.4
(22) Date of filing: 19.12.2024
(51) Int. Cl.: H04L 47/10

(54) **COMMUNICATION METHOD AND RELATED DEVICE**

(30) Priority: 08.02.2024 CN 202410178018; 01.03.2024 CN 202410242792
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Goddar, Heinz J.
(86) International application number: PCT/CN2024/140565
(87) International publication number: WO 2025/167345

(57) **Abstract**

This application provides a communication method and a related device, and belongs to the field of data processing. In the method, when a to-be-discarded data packet has been delivered to a lower layer, a transmit end and/or a receive end may discard the to-be-discarded data packet. In addition, after discarding the to-be-discarded data packet, the transmit end and/or the receive end may further update a transmission status parameter in a timely manner, for example, a status parameter of a transmitting window, a status parameter of a receiving window, and a status parameter of a PDCP layer. In this way, transmission or retransmission of the to-be-discarded data packet can be avoided, and a data receiving failure of the receive end can be avoided, thereby saving window resources and improving communication quality.

## Description

This application claims priority to Chinese Patent Application No. 202410178018.4, filed with the China National Intellectual Property Administration on February 8, 2024 and entitled "COMMUNICATION METHOD AND RELATED DEVICE", and priority to Chinese Patent Application No. 202410242792.7, filed with the China National Intellectual Property Administration on March 1, 2024 and entitled "COMMUNICATION METHOD AND RELATED DEVICE", both of which are incorporated herein by reference in their entireties.

### TECHNICAL FIELD

This application relates to the field of communication technologies, and in particular, to a communication method and a related device.

### BACKGROUND

A layer 2 (layer 2, L2) of new radio (new radio, NR) includes a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, a physical layer (physical, PHY), and the like. Header information of each layer is added to data generated by an application layer at a transmit end to assist in implementing the functions of each layer. The RLC layer adds header information of the RLC layer to a PDCP protocol service data unit (service data unit, SDU) from the PDCP layer to encapsulate the PDCP SDU into an RLC SDU, places the RLC SDU into a sending queue of a transmitting window of the RLC layer, and delivers it to the MAC layer. The MAC layer encapsulates the RLC SDU into a MAC SDU, and then sends the MAC SDU to a receive end through a PHY layer.

In some scenarios, a part of data packets may be discarded. After determining that a part of data packets needs to be discarded, the PDCP layer may transmit, to the RLC layer, a request for discarding the part of data packets. According to related protocol specifications, in an acknowledged mode (acknowledged mode, AM), no sequence number (sequence number, SN) gap (SN gap) can be introduced into an SDU. That is, after the RLC layer receives the request for discarding the part of data packets, if SDUs corresponding to the part of data packets have not been transmitted to a lower layer (for example, a MAC layer and a physical layer), the RLC layer directly discards the SDUs corresponding to the part of data packets. If the SDUs corresponding to the part of data packets have been transmitted to the lower layer, according to related protocol specifications, the transmit end cannot perform discarding on the SDUs corresponding to the part of data packets. This may cause a transmission window failure between the transmit end and the receive end. For example, the transmit end frequently retransmits the SDUs corresponding to the part of data packets, and a part of status parameters of a receiving window of the receive end cannot be updated, causing the receiving window to be deadlocked.

### SUMMARY

Embodiments of this application provide a communication method and a related device, so that a transmission status parameter of a device can be updated based on a discarded data packet. The method can avoid transmission or retransmission of the discarded data packet and prevent a receiving window from being deadlocked, thereby improving communication efficiency and saving air interface resources.

According to a first aspect, a communication method is provided, and applied to a transmit end. The method includes: determining a discarded data packet; and updating a transmission status parameter of the transmit end based on the discarded data packet.

In this implementation, the transmit end may update the transmission status parameter of the transmit end, for example, a status parameter of a transmitting window, based on the discarded data packet. In this way, even if the discarded data packet has been transmitted to a lower layer, the transmit end can be prevented from transmitting or retransmitting the discarded data packet, thereby improving communication efficiency and saving air interface resources.

Optionally, the discarded data packet may be an SDU or a protocol data unit of an RLC layer.

In a possible implementation of the first aspect, the transmission status parameter of the transmit end includes a first status parameter, and the first status parameter is used to indicate a sequence number of a next to-be-acknowledged received data packet of the transmit end.

Optionally, the first status parameter may be a TX_Next_Ack parameter mentioned below.

In a possible implementation of the first aspect, the discarded data packet meets a first condition; and the first condition includes: the discarded data packet is in the transmitting window; or a sequence number of the discarded data packet is between the sequence number indicated by the first status parameter and a sequence number of a next data packet sent by the transmit end; or the sequence number of the discarded data packet is greater than or equal to the sequence number indicated by the first status parameter; or the sequence number of the discarded data packet is less than or equal to the sequence number of the next data packet sent by the transmit end.

In this implementation, that the sequence number of the discarded data packet is between the sequence number indicated by the first status parameter and the sequence number of the next data packet sent by the transmit end may be: Sequence number indicated by the first status parameter < Sequence number of the discarded data packet < Sequence number of the next data packet sent by the transmit end; or may be: Sequence number indicated by the first status parameter ≤ Sequence number of the discarded data packet ≤ Sequence number of the next data packet sent by the transmit end; or may be: Sequence number indicated by the first status parameter ≤ Sequence number of the discarded data packet < Sequence number of the next data packet sent by the transmit end; or may be: Sequence number indicated by the first status parameter < Sequence number of the discarded data packet ≤ Sequence number of the next data packet sent by the transmit end.

Optionally, the first condition may be, for example, a discard condition corresponding to an RLC layer of the transmit end in the following description.

In a possible implementation of the first aspect, the updating the transmission status parameter of the transmit end based on the discarded data packet includes: when the discarded data packet meets a second condition, updating the transmission status parameter of the transmit end based on the discarded data packet; and the second condition includes: the discarded data packet is in the transmitting window; or the sequence number of the discarded data packet is between the sequence number indicated by the first status parameter and the sequence number of the next data packet sent by the transmit end; or the sequence number of the discarded data packet is greater than or equal to the sequence number indicated by the first status parameter; or the sequence number of the discarded data packet is less than or equal to the sequence number of the next data packet sent by the transmit end.

In this implementation, that the sequence number of the discarded data packet is between the sequence number indicated by the first status parameter and the sequence number of the next data packet sent by the transmit end may be: Sequence number indicated by the first status parameter < Sequence number of the discarded data packet < Sequence number of the next data packet sent by the transmit end; or may be: Sequence number indicated by the first status parameter ≤ Sequence number of the discarded data packet ≤ Sequence number of the next data packet sent by the transmit end; or may be: Sequence number indicated by the first status parameter ≤ Sequence number of the discarded data packet < Sequence number of the next data packet sent by the transmit end; or may be: Sequence number indicated by the first status parameter < Sequence number of the discarded data packet ≤ Sequence number of the next data packet sent by the transmit end.

Optionally, the second condition may be, for example, an update condition corresponding to the RLC layer of the transmit end in the following description.

In a possible implementation of the first aspect, the updating the transmission status parameter of the transmit end based on the discarded data packet includes: when a first data packet with a sequence number the same as the sequence number indicated by the first status parameter exists in the discarded data packet, updating the first status parameter to a second sequence number after a first sequence number of the first data packet; or corresponding to that no data packet with a sequence number the same as the sequence number indicated by the first status parameter exists in the discarded data packet, when the first status parameter is updated to the first sequence number, updating the first status parameter to the second sequence number.

In this implementation, if neither the second condition nor the first condition exists, the transmit end may update the transmission status parameter of the transmitting window when the sequence number indicated by the first status parameter is the same as the first sequence number of the first data packet in the discarded data packets. If no data packet with a sequence number the same as the sequence number indicated by the first status parameter exists in the discarded data packet, the transmit end may wait until the first status parameter is updated to the first sequence number, and update the transmission status parameter of the transmitting window. In this implementation, the first data packet may be any data packet in the discarded data packet.

In a possible implementation of the first aspect, the updating the transmission status parameter of the transmit end based on the discarded data packet includes:
when the sequence number indicated by the first status parameter is the same as a first sequence number of a first data packet in the discarded data packet, updating the first status parameter to a second sequence number after the first sequence number, where the first data packet is a data packet with a smallest sequence number in the discarded data packet; or corresponding to that the sequence number indicated by the first status parameter is different from the first sequence number, when the first status parameter is updated to the first sequence number, updating the first status parameter to the second sequence number.

In this implementation, retransmission of the discarded data packet can be avoided, which is beneficial to communication quality and saves air interface resources.

In a possible implementation of the first aspect, the second sequence number is not in the sequence number corresponding to the discarded data packet. That is, a data packet corresponding to the second sequence number is not in the discarded data packet, or the data packet corresponding to the second sequence number is not discarded.

In a possible implementation of the first aspect, the discarded data packet includes a first consecutive data packet, the first consecutive data packet includes the first data packet, and the second sequence number is a sequence number of a second data packet after the first consecutive data packet.

Optionally, the first consecutive data packet may include N (N is an integer greater than or equal to 1) data packets, and the first data packet may be a 1^{st} data packet in the first consecutive data packet, or may be a data packet in the middle of the first consecutive data packet.

Optionally, the consecutive data packet may be data packets with consecutive sequence numbers.

In a possible implementation of the first aspect, the second data packet is a next data packet of the first consecutive data packet, or a 1^{st} data packet that is after the first consecutive data packet and that has no acknowledgment feedback received, or a 1^{st} data packet that is after the first consecutive data packet and is not in the discarded data packet and that has no acknowledgment feedback received.

In a possible implementation of the first aspect, the first sequence number and a third sequence number corresponding to a last data packet in the first consecutive data packet are maintained based on a first discard status parameter and a second discard status parameter respectively.

Optionally, the first discard status parameter may be TX_discard_low in the following description, and the discard status parameter may be TX_Discard_High in the following description.

In a possible implementation of the first aspect, the method further includes:
determining at least one discarded consecutive data packet, and updating the first discard status parameter and the second discard status parameter based on the at least one discarded consecutive data packet.

In a possible implementation of the first aspect, a sequence number corresponding to the at least one consecutive data packet has a maximum value being a fourth sequence number, and a minimum value being a fifth sequence number, and the fourth sequence number is greater than or equal to the fifth sequence number; and the updating the first discard status parameter and the second discard status parameter based on the at least one discarded consecutive data packet includes:
corresponding to that the fourth sequence number is less than the first discard status parameter, updating the first discard status parameter to the fifth sequence number, and updating the second discard status parameter to the fourth sequence number; or
corresponding to that the fourth sequence number is greater than the second discard status parameter and the fifth sequence number is greater than or equal to the first discard status parameter and less than or equal to the second discard status parameter, updating the second discard status parameter to the fourth sequence number; or
corresponding to that the fourth sequence number is less than or equal to the second discard status parameter and greater than or equal to the first status parameter and the fifth sequence number is less than the first discard status parameter, updating the first discard status parameter to the fifth sequence number; or
corresponding to that the fourth sequence number is less than or equal to the second discard status parameter and greater than or equal to the first status parameter and the fifth sequence number is less than the first discard status parameter, updating the first discard status parameter to the fifth sequence number; or
corresponding to that the fourth sequence number and the fifth sequence number are between the first discard status parameter and the second discard status parameter or the fifth sequence number is greater than the second discard status parameter, skipping updating the first discard status parameter and the second discard status parameter.

In a possible implementation of the first aspect, the method further includes:
sending discard information to a receive end, where the discard information is used to indicate the discarded data packet.

In this implementation, after receiving the discard information, the receive end may discard the discarded data packet based on the discarded data packet indicated by the discard information and/or a transmission status parameter of the receive end.

In a possible implementation of the first aspect, the method further includes: receiving first indication information; and
discarding the discarded data packet in response to the first indication information.

In this implementation, before determining the discarded data packet or in a process of determining the discarded data packet, the transmit end may discard the discarded data packet when receiving the first indication information. That is, if the transmit end has not received the first indication information, the transmit end does not discard the discarded data packet.

In a possible implementation of the first aspect, the method further includes: determining at least one discarded consecutive data packet, where a sequence number in the at least one consecutive data packet has a maximum value being a fourth sequence number, and a minimum value being a fifth sequence number, and the fourth sequence number is greater than or equal to the fifth sequence number; and corresponding to that the fourth sequence number is less than the first discard status parameter, updating the first discard status parameter to the fifth sequence number, and updating the second discard status parameter to the fourth sequence number; or corresponding to that the fourth sequence number is greater than the second discard status parameter and the fifth sequence number is greater than or equal to the first discard status parameter and less than or equal to the second discard status parameter, updating the second discard status parameter to the fourth sequence number; or corresponding to that the fourth sequence number is less than or equal to the second discard status parameter and greater than or equal to the first status parameter and the fifth sequence number is less than the first discard status parameter, updating the first discard status parameter to the fifth sequence number; or corresponding to that the fourth sequence number is less than or equal to the second discard status parameter and greater than or equal to the first status parameter and the fifth sequence number is less than the first discard status parameter, updating the first discard status parameter to the fifth sequence number; or corresponding to that the fourth sequence number and the fifth sequence number are between the first discard status parameter and the second discard status parameter or the fifth sequence number is greater than the second discard status parameter, skipping updating the first discard status parameter and the second discard status parameter.

In a possible implementation of the first aspect, the method further includes: sending discard information to a receive end, where the discard information is used to indicate the discarded data packet.

In a possible implementation of the first aspect, the determining the discarded data packet includes: receiving the first indication information, and determining the discarded data packet in response to the first indication information.

In this implementation, the first indication information may be used to enable or disable a function of determining the discarded data packet by the transmit end and updating the transmission status parameter of the receive end based on the discarded data packet. The transmit end may determine the discarded data packet only when receiving the first indication information to enable the function, and update a function of the transmission status parameter of the receive end based on the discarded data packet.

According to a second aspect, a communication method is provided, and applied to a receive end. The method includes: determining a discarded data packet; and updating a transmission status parameter of the receive end based on the discarded data packet.

In this implementation, the receive end may update the transmission status parameter of the receive end, for example, a status parameter of a receiving window or a status parameter of a PDCP layer, based on the discarded data packet. In this way, even if the discarded data packet has been transmitted to a lower layer, a transmit end can be prevented from transmitting or retransmitting the discarded data packet, and the receiving window can be prevented from being deadlocked, thereby improving communication efficiency and saving air interface resources.

In a possible implementation of the second aspect, the transmission status parameter of the receive end includes at least one of the following parameters: a second status parameter, where the second status parameter is used to indicate a sequence number of a next data packet of a data packet that is latest completely received by the receive end in sequence; a third status parameter, where the third status parameter is used to indicate a sequence number of a next data packet of a data packet latest completely received by the receive end; or a fourth status parameter, where the fourth status parameter is used to indicate a next sequence number of a sequence number corresponding to a data packet that triggers a reassembly timer.

Optionally, the second status parameter may be RX_Next in the following description, the third status parameter may be RX_Highest_Status in the following description, and the fourth status parameter may be RX_Next_Status_Trigger in the following description.

In a possible implementation of the second aspect, the updating the transmission status parameter of the receive end based on the discarded data packet includes: when the discarded data packet meets a third condition, updating the transmission status parameter of the receive end based on the discarded data packet; and the third condition includes: the discarded data packet is in the receiving window; or a sequence number of the discarded data packet is between the sequence number indicated by the second status parameter and a largest sequence number among those of data packets that have been completely received by the receive end; or the sequence number of the discarded data packet is between the sequence number indicated by the second status parameter and the sequence number indicated by the third status parameter; or the sequence number of the discarded data packet is between the sequence number indicated by the second status parameter and the sequence number indicated by the fourth status parameter; or the sequence number of the discarded data packet is greater than or equal to the sequence number indicated by the second status parameter; or the sequence number of the discarded data packet is less than or equal to the largest sequence number among those of the data packets that have been completely received by the receive end; or the sequence number of the discarded data packet is less than or equal to the sequence number indicated by the third status parameter; or the sequence number of the discarded data packet is less than or equal to the sequence number indicated by the fourth status parameter.

In this implementation, the receive end updates the transmission status parameter of the receive end only when the discarded data packet meets the third condition, and does not need to update the transmission status parameter of the receive end when the discarded data packet does not meet the third condition. In this way, overheads of maintaining the transmission status parameter of the receive end can be reduced.

In a possible implementation of the second aspect, the updating the transmission status parameter of the receive end based on the discarded data packet includes: when a third data packet with a sequence number the same as the sequence number indicated by the second status parameter exists in the discarded data packet, updating the second status parameter to a seventh sequence number after a sixth sequence number of the third data packet; or corresponding to that no data packet with a sequence number the same as the sequence number indicated by the second status parameter exists in the discarded data packet, when the second status parameter is updated to the sixth sequence number, updating the second status parameter to the seventh sequence number.

In this implementation, if the third condition does not exist, the receive end may update the transmission status parameter of the receiving window when the sequence number indicated by the second status parameter is the same as the sixth sequence number of the third data packet in the discarded data packet. If no data packet with a sequence number the same as the sequence number indicated by the second status parameter exists in the discarded data packet, the receive end may wait until the second status parameter is updated to the sixth sequence number, and update the transmission status parameter of the receiving window. In this implementation, the third data packet may be any data packet in the discarded data packet.

In a possible implementation of the second aspect, the updating the transmission status parameter of the receive end based on the discarded data packet includes:
when the sequence number indicated by the second status parameter is the same as a sixth sequence number of a third data packet in the discarded data packet, updating the second status parameter to a seventh sequence number after the sixth sequence number, where the third data packet is a data packet with a smallest sequence number in the discarded data packet; or
corresponding to that the sequence number indicated by the second status parameter is different from the sixth sequence number, when the second status parameter is updated to the sixth sequence number, updating the second status parameter to the seventh sequence number.

In a possible implementation of the second aspect, the discarded data packet includes a second consecutive data packet, the second consecutive data packet includes the third data packet, and the seventh sequence number is a sequence number of a fourth data packet after the second consecutive data packet.

Optionally, the second consecutive data packet may include N (N is an integer greater than or equal to 1) data packets, and the third data packet may be a 1^{st} data packet in the second consecutive data packet, or may be a data packet in the middle of the second consecutive data packet.

In a possible implementation of the second aspect, the seventh sequence number is not in the sequence number corresponding to the discarded data packet. That is, a data packet corresponding to the seventh sequence number is not in the discarded data packet, or the data packet corresponding to the seventh sequence number is not discarded.

In a possible implementation of the second aspect, the fourth data packet is a next data packet of the second consecutive data packet, or a 1^{st} incompletely received data packet after the second consecutive data packet, or a 1^{st} data packet that is not completely received after the second consecutive data packet and that is not in the discarded data packet.

In a possible implementation of the second aspect, the discarded data packet includes a second consecutive data packet, and the second consecutive data packet includes the third data packet; and the updating the transmission status parameter of the receive end based on the discarded data packet further includes:
when a sequence number of a last piece of data in the second consecutive data packet is greater than or equal to the sequence number indicated by the third status parameter, updating the third status parameter to an eighth sequence number; and/or
when the sequence number of the last piece of data in the second consecutive data packet is greater than or equal to the sequence number corresponding to the fourth status parameter, updating the fourth status parameter to a next sequence number of the largest sequence number among those of the data packets that have been completely received by the receive end, where
the eighth sequence number is a sequence number of a fifth data packet after the second consecutive data packet, and the fifth data packet is a next data packet of the second consecutive data packet, or a 1^{st} incompletely received data packet after the second consecutive data packet.

In a possible implementation of the second aspect, the method further includes:
sending a status report to a transmit end, where the status report is used to indicate that all data packets of the second consecutive data packet have been completely received by the receive end.

In a possible implementation of the second aspect, the sending the report to the transmit end includes:
when an acknowledgment feedback ACK of one or more data packets in the second consecutive data packet is not sent to the transmit end, sending the status report to the transmit end, where the status report includes the ACK of the one or more data packets.

In a possible implementation of the second aspect, the sixth sequence number and a ninth sequence number corresponding to a last data packet in the second consecutive data packet are maintained based on a third discard status parameter and a fourth discard status parameter respectively.

Optionally, the third discard status parameter may be RX_discard_low in the following description, and the fourth discard status parameter may be RX_Discard_High in the following description.

In a possible implementation of the second aspect, the method further includes:
determining at least one discarded consecutive data packet, and updating the third discard status parameter and the fourth discard status parameter based on the at least one discarded consecutive data packet.

In a possible implementation of the second aspect, a sequence number corresponding to the at least one consecutive data packet has a maximum value being a tenth sequence number, and a minimum value being an eleventh sequence number, and the tenth sequence number is greater than or equal to the eleventh sequence number; and the updating the third discard status parameter and the fourth discard status parameter based on the at least one discarded consecutive data packet includes:
corresponding to that the tenth sequence number is less than the third discard status parameter, updating the third discard status parameter to the eleventh sequence number, and updating the fourth discard status parameter to the tenth sequence number; or
corresponding to that the tenth sequence number is greater than the fourth discard status parameter and the eleventh sequence number is greater than or equal to the third discard status parameter and less than or equal to the discard status parameter, updating the fourth discard status parameter to the tenth sequence number; or
corresponding to that the tenth sequence number is less than or equal to the fourth discard status parameter and greater than or equal to the third status parameter and the eleventh sequence number is less than the third discard status parameter, updating the third discard status parameter to the eleventh sequence number; or
corresponding to that the tenth sequence number is less than or equal to the fourth discard status parameter and greater than or equal to the third status parameter and the eleventh sequence number is less than the third discard status parameter, updating the third discard status parameter to the eleventh sequence number; or
corresponding to that the tenth sequence number and the eleventh sequence number are between the third discard status parameter and the fourth discard status parameter or the eleventh sequence number is greater than the fourth discard status parameter, skipping updating the third discard status parameter and the fourth discard status parameter.

In a possible implementation of the second aspect, the receive end includes a radio link control layer, and the radio link control layer performs: determining a discarded data packet; and updating the transmission status parameter of the receive end based on the discarded data packet.

In a possible implementation of the second aspect, the transmission status parameter of the receive end includes at least one of the following parameters:
a fifth status parameter, where the fifth status parameter is used to indicate a COUNT value corresponding to a 1^{st} data packet that is not submitted by a PDCP layer of the receive end to an upper layer of the PDCP layer; and
a sixth status parameter, where the sixth status parameter is used to indicate a COUNT value corresponding to a data packet that triggers a reassembly timer of the PDCP layer.

In a possible implementation of the second aspect, the updating the transmission status parameter of the receive end based on the discarded data packet includes:
when the discarded data packet meets a fourth condition, updating the transmission status parameter of the receive end based on the discarded data packet; and the fourth condition includes: a COUNT value corresponding to the discarded data packet is between the COUNT value indicated by the fifth status parameter and a COUNT value corresponding to a next data packet received at the PDCP layer; or the COUNT value corresponding to the discarded data packet is greater than or equal to the COUNT value indicated by the fifth status parameter; or the COUNT value corresponding to the discarded data packet is less than or equal to the COUNT value corresponding to the next data packet received at the PDCP layer.

In a possible implementation of the second aspect, the updating the transmission status parameter of the receive end based on the discarded data packet includes: when a sixth data packet with a COUNT value the same as the COUNT value indicated by the fifth status parameter exists in the discarded data packet, updating the fifth status parameter to a second COUNT value after a first COUNT value of the sixth data packet; or corresponding to that no data packet with a COUNT value the same as the COUNT value indicated by the fifth status parameter exists in the discarded data packet, when the fifth status parameter is updated to the first COUNT value, updating the fifth status parameter to the second COUNT value.

In this implementation, if the fourth condition does not exist, the receive end may update the transmission status parameter of the receiving window when the COUNT value indicated by the fifth status parameter is the same as the first COUNT value of the sixth data packet in the discarded data packet. If no data packet whose COUNT value is the same as the COUNT value indicated by the first status parameter exists in the discarded data packet, the receive end may wait until the fifth status parameter is updated to the first COUNT value, and update the transmission status parameter of the receiving window. In this implementation, the sixth data packet may be any data packet in the discarded data packet.

In a possible implementation of the second aspect, the updating the transmission status parameter of the receive end based on the discarded data packet includes:
when the COUNT value indicated by the fifth status parameter is the same as a first COUNT value of a sixth data packet in the discarded data packets, updating the fifth status parameter to a second COUNT value after the first COUNT value, where the sixth data packet is a data packet with a smallest COUNT value in the discarded data packet; or correspondingly to that the COUNT value indicated by the fifth status parameter is different from the first COUNT value, when the fifth status parameter is updated to the first COUNT value, updating the fifth status parameter to the second COUNT value.

In a possible implementation of the second aspect, the discarded data packet includes a third consecutive data packet, the third consecutive data packet includes the sixth data packet, and the second COUNT value is a COUNT value of a seventh data packet after the sixth data packet.

Optionally, the third consecutive data packet may include Q data packets, and Q is an integer greater than or equal to 1. The sixth data packet may be a 1^{st} data packet in the third consecutive data packet, or may be a data packet in the middle of the third consecutive data packet.

In a possible implementation of the second aspect, the second COUNT value is not in the COUNT value corresponding to the discarded data packet.

In a possible implementation of the second aspect, the seventh data packet is a next data packet of the third consecutive data packet, or a 1^{st} data packet that is after the third consecutive data packet and that is not submitted to the upper layer of the PDCP layer, or a 1^{st} data packet that is after the third consecutive data packet and that is not submitted to the upper layer of the PDCP layer and is not in the discarded data packet.

In a possible implementation of the second aspect, the updating the transmission status parameter of the receive end based on the discarded data packet further includes:
when the second COUNT value is greater than the COUNT value indicated by the sixth status parameter, updating the sixth status parameter to the COUNT value corresponding to the next data packet received at the PDCP layer; and/or
starting a reassembly timer of the PDCP layer.

In a possible implementation of the second aspect, the first COUNT value and a third COUNT value corresponding to a last data packet in the third consecutive data packet are maintained based on a fifth discard status parameter and a sixth discard status parameter respectively.

Optionally, the fifth discard status parameter may be PDCPRX_discard_low in the following description, and the sixth discard status parameter may be PDCPRX_Discard_High in the following description.

In a possible implementation of the second aspect, the method further includes:
determining at least one discarded consecutive data packet, where a COUNT value corresponding to the at least one consecutive data packet has a maximum value being a fourth COUNT value, and a minimum value being a fifth COUNT value, and the fourth COUNT value is greater than or equal to the fifth COUNT value; and
corresponding to that the fourth COUNT value is less than the fifth discarding status parameter, updating the fifth discarding status parameter to the fifth COUNT value, and updating the sixth discarding status parameter to the fourth COUNT value; or
corresponding to that the fourth COUNT value is greater than the fifth discard status parameter, and the fifth COUNT value is greater than or equal to the fifth discard status parameter and less than or equal to the sixth discard status parameter, updating the sixth discard status parameter to the fourth COUNT value; or
corresponding to that the fourth COUNT value is less than or equal to the sixth discard status parameter and greater than or equal to the fifth status parameter and the fifth COUNT value is less than the fifth discard status parameter, updating the fifth discard status parameter to the fifth COUNT value; or
corresponding to that the fourth COUNT value is less than or equal to the sixth discard status parameter and greater than or equal to the fifth status parameter and the fifth COUNT value is less than the fifth discard status parameter, updating the fifth discard status parameter to the fifth COUNT value; or
corresponding to that the fourth COUNT value and the fifth COUNT value are between the fifth discard status parameter and the sixth discard status parameter or the fifth COUNT value is greater than the sixth discard status parameter, skipping updating the fifth discard status parameter and the sixth discard status parameter.

In a possible implementation of the second aspect, the determining the discarded data packet includes: receiving discard information indicating the discarded data packet.

In this implementation, the receive end may determine a discarded data packet indicated by the discard information as the discarded data packet.

In a possible implementation of the second aspect, the PDCP layer performs: determining the discarded data packet; and updating the transmission status parameter of the receive end based on the discarded data packet.

According to a third aspect, a transmit end device is provided, including: one or more processors; and one or more memories. The one or more memories store one or more computer programs, the one or more computer programs include instructions, and when the instructions are executed by the one or more processors, the terminal device is enabled to perform the method according to any implementation of the first aspect to the third aspect.

According to a fourth aspect, a communication system is provided, including a transmit end device and a receive end device. The transmit end device is configured to perform the method according to any implementation of the first aspect, and the receive end is configured to perform the method according to any implementation of the second aspect.

According to a fifth aspect, a computer-readable storage medium is provided, where the computer-readable storage medium stores computer-executable program instructions, and when the computer executable program instructions are run on a computer, the computer is enabled to perform the method according to any implementation of the first aspect to the second aspect.

According to a sixth aspect, a computer program product is provided, where the computer program product includes computer program code, and when the computer program code is run on a computer, the computer is enabled to perform the method according to any implementation of the first aspect to the second aspect.

It should be understood that for beneficial effects of the third aspect to the sixth aspect, reference may be made to the descriptions of the first aspect and the second aspect. Details are not described herein again.

### BRIEF DESCRIPTION OF DRAWINGS

FIG. 1A is a schematic diagram of a user plane protocol architecture according to some embodiments of this application;
FIG. 1B is a schematic diagram of a process in which a transmit end transmits a protocol data unit set to a receive end according to some embodiments of this application;
FIG. 2 is a schematic diagram of a control plane protocol architecture according to some embodiments of this application;
FIG. 3 is a schematic diagram of a transmitting window according to some embodiments of this application;
FIG. 4 is a schematic diagram of a receiving window according to some embodiments of this application;
FIG. 5 is a schematic diagram of a status parameter of a PDCP layer according to some embodiments of this application;
FIG. 6A is a schematic diagram of a process in which a transmit end sends a data packet according to some embodiments of this application;
FIG. 6B is a schematic diagram of a process in which a receive end receives a data packet according to some embodiments of this application;
FIG. 7A is a schematic diagram of a relationship between a data packet A and a transmitting window according to some embodiments of this application;
FIG. 7B is a schematic diagram of a relationship between a data packet A and a receiving window according to some embodiments of this application;
FIG. 8A to FIG. 8D are schematic diagrams of some relationships between discarded data packets and transmitting windows according to some embodiments of this application;
FIG. 9A to FIG. 9E are schematic diagrams of some cases of updating a transmit end discard window according to some embodiments of this application;
FIG. 10A is a schematic diagram of updating a transmission parameter of a receive end according to some embodiments of this application;
FIG. 10B is another schematic diagram of updating a transmission parameter of a receive end according to some embodiments of this application;
FIG. 11A to FIG. 11G are schematic diagrams of some cases of updating a receive end discard window according to some embodiments of this application;
FIG. 12A to FIG. 12C are schematic diagrams of updating a status parameter of a receiving window according to some embodiments of this application;
FIG. 13A and FIG. 13B are some schematic diagrams of updating a status parameter of a PDCP layer according to some embodiments of this application;
FIG. 14A to FIG. 14E are schematic diagrams of some cases of updating a PDCP discard window according to some embodiments of this application;
FIG. 15A is a schematic diagram in which a network side device sends first indication information to user equipment according to some embodiments of this application;
FIG. 15B is a schematic diagram in which a PDCP layer sends first indication information to an RLC layer according to some embodiments of this application;
FIG. 15C is a schematic diagram in which a MAC layer sends first indication information to an RLC layer according to some embodiments of this application;
FIG. 16 is a schematic interaction flowchart of a communication method according to some embodiments of this application;
FIG. 17 is a schematic interaction flowchart of another communication method according to some embodiments of this application;
FIG. 18 is a schematic flowchart of a communication method according to some embodiments of this application;
FIG. 19 is a schematic flowchart of another communication method according to some embodiments of this application;
FIG. 20 is a schematic flowchart of still another communication method according to some embodiments of this application;
FIG. 21 is a schematic diagram of a system architecture according to some embodiments of this application; and
FIG. 22 is a schematic structural diagram of a transmit end device 00 according to some embodiments of this application.

### DESCRIPTION OF EMBODIMENTS

It should be noted that terms used in implementations of embodiments of this application are merely used to explain specific embodiments of this application, but are not intended to limit this application. In the description of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, unless otherwise specified, "a plurality of" means two or more than two, and "at least one" or "one or more" mean one, two, or more.

In the following description, the terms "first" and "second" are merely intended for a purpose of description, and shall not be interpreted as indicating or implying relative importance or implying a quantity of indicated technical features. Therefore, a feature defined with "first" or "second" may explicitly or implicitly include one or more features.

As described in this specification, referring to "one embodiment" or "some embodiments" or the like means that one or more embodiments of this application include particular features, structures, or characteristics described with reference to the embodiments. Therefore, in this specification, statements such as "in an embodiment", "in some embodiments", "in other embodiments", and "in some other embodiments" that appear at different places in this specification do not necessarily mean reference to a same embodiment, instead, they mean "one or more but not all of the embodiments", unless otherwise specifically emphasized. The terms "include", "comprise", "have", and their variants all mean "include but are not limited to", unless otherwise specifically emphasized.

For ease of understanding of the communication method provided in this application, concepts or belongings that may be involved in the following embodiments are first described.

### 1. Protocol data unit set

According to a definition by the SA, a protocol data unit set may be used as a data unit in a data transmission process. A protocol data unit set includes one or more data packets, and each data packet may carry a payload that forms an information unit. An application layer of a receive end may obtain a complete information unit, for example, information corresponding to a video frame or a picture frame, based on payloads carried by all protocol data units (protocol data unit, PDU) in a protocol data unit set. In an embodiment of this application, the data unit may include a frame and a video slice. The frame may be understood as a carrier for transmitting data, and the video slice may be understood as a data unit of a specific type in a video service. From a perspective of the carrier for transmitting data, in some cases, one protocol data unit set may correspond to one frame; and from a perspective of a type of transmitted data, in some cases, in the video traffic, data carried by one protocol data unit set may correspond to one video slice.

In general, the application layer of the receive end needs to receive all data packets in a protocol data unit set to obtain a complete information unit, and discarding one or more data packets may cause the receive end to fail to obtain the entire information unit. However, in some cases, the application layer of the receive end may also calculate data of the discarded part based on data of obtained PDUs by using some algorithms, so that even if some (for example, a small number of or less important) PDUs are discarded, the application layer of the receive end can still recover all or a part of the information unit.

A concept of the PDU set is proposed in the SA, and is defined as follows:
PDU Set: A PDU Set is composed of one or more PDUs carrying the payload of one unit of information generated at the application level (e.g. a frame or video slice for XRM Services, as used in TR 26.926 [27]). In some implementations all PDUs in a PDU Set are needed by the application layer to use the corresponding unit of information. In other implementations, the application layer can still recover parts all or of the information unit, when some PDUs are missing. That is, one PDU set includes one or more PDUs, which carry a payload of an information unit generated by an application layer, for example, a frame or a video slice. In the foregoing definitions indicate that in some implementations, the application layer needs to receive all PDUs in the PDU set to obtain the information unit; or in another implementation, when some PDUs are discarded, the application layer may still recover all or a part of the information unit.

A protocol data unit set may be used as a data unit, and may specifically correspond to a frame or a video slice. A protocol data unit set includes a plurality of data packets, each data packet has a sequence number (such as a PDU SN) different from those of other data packets, and payloads carried in the plurality of data packets may constitute an information unit (such as a video frame or a picture). Different protocol data unit sets may be set to different importance levels, a protocol data unit set with a high importance level may be used, for example, for transmission of a frame with high importance, and a protocol data unit set with a low importance level may be used, for example, for transmission of a frame with low importance. In this way, frames of different importance are transmitted separately for subsequent differential processing on these frames.

For a same group of payloads, division of data packets at different layers may vary, and quantities and sequence numbers of data packets at different layers are also different. For ease of description, in the following embodiments, a sequence number of a data packet (for example, an RLC SDU or an RLC PDU) of an RLC layer is referred to as an RLC SN, and a sequence number of a data packet (for example, a PDCP SDU or a PDCP PDU) of a PDCP layer is referred to as a PDCP SN.

### 2. User plane protocol architecture

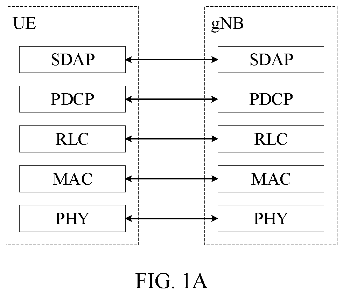

Refer to FIG. 1A. The user plane protocol architecture may include an SDAP layer, a PDCP layer, an RLC layer, a MAC layer, and a physical layer.

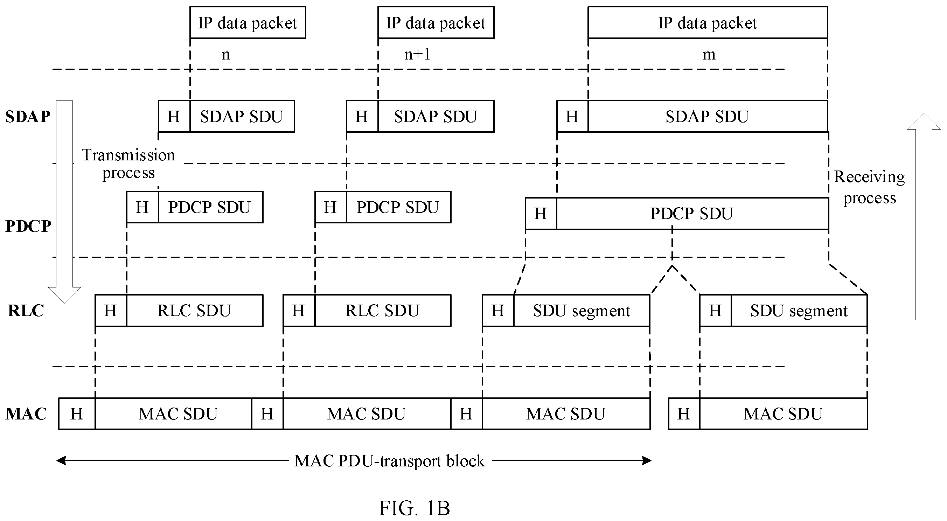

Refer to FIG. 1B. Based on the user plane protocol architecture in FIG. 1A, a process in which a transmit end transmits a data packet of a protocol data unit set to a receive end may include the following steps: The SDAP layer obtains an IP data packet transmitted by an upper layer (an application layer or a transport layer) of the SDAP layer, performs radio bearer (radio bearer, RB) processing on a basis of the IP data packet, and generates a data packet including a header (header) and an entity part SDAP SDU (namely, a payload). The data packet may be marked as an SDAP PDU data packet. Then, the SDAP layer transmits the SDAP PDU data packet to the PDCP layer. After obtaining the SDAP PDU data packet, the PDCP layer processes the data packet according to the PDCP protocol, and generates a data packet including a header H and an entity part PDCP SDU (including the SDAP SDU and the header of the SDAP layer). The data packet may be marked as a PDCP PDU data packet. Then, the PDCP layer further transmits the PDCP PDU data packet to the RLC layer. After obtaining the PDCP PDU data packet, the RLC layer processes the PDCP PDU data packet according to the RLC protocol, and generates a data packet including a header H and an entity part RLC SDU (including the PDCP SDU and the header of the PDCP layer). The data packet may be marked as an RLC PDU data packet. Then, the RLC layer further transmits the RLC PDU data packet to the MAC layer. After obtaining the RLC PDU data packet, the MAC layer processes the RLC PDU data packet according to the MAC protocol, and generates a data packet including a header H and an entity part MAC SDU (including the RLC SDU and the header of the RLC layer). The data packet may be marked as a MAC PDU data packet.

According to the foregoing process, the MAC layer can obtain a plurality of MAC PDU data packets corresponding to one data unit, and based on these MAC PDU data packets, the MAC can finally obtain a MAC PDU transport block (MAC PDU transport block) including a plurality of data packets. Then, the MAC layer may transmit the generated MAC PDU transport block to the receive end by using air interface resources.

After receiving the protocol data unit, the receive end may parse the protocol data unit according to an inverse of a process of generating the protocol data unit, so that the application layer of the receive end can obtain, based on a parsing result, data carried by all PDUs in the protocol data unit set, and obtain an information unit based on payloads carried by all the PDUs. A specific manner and a process in which the receive end parses the data in the protocol data unit set may be set according to a related protocol or an actual requirement.

### 3. Control plane protocol architecture

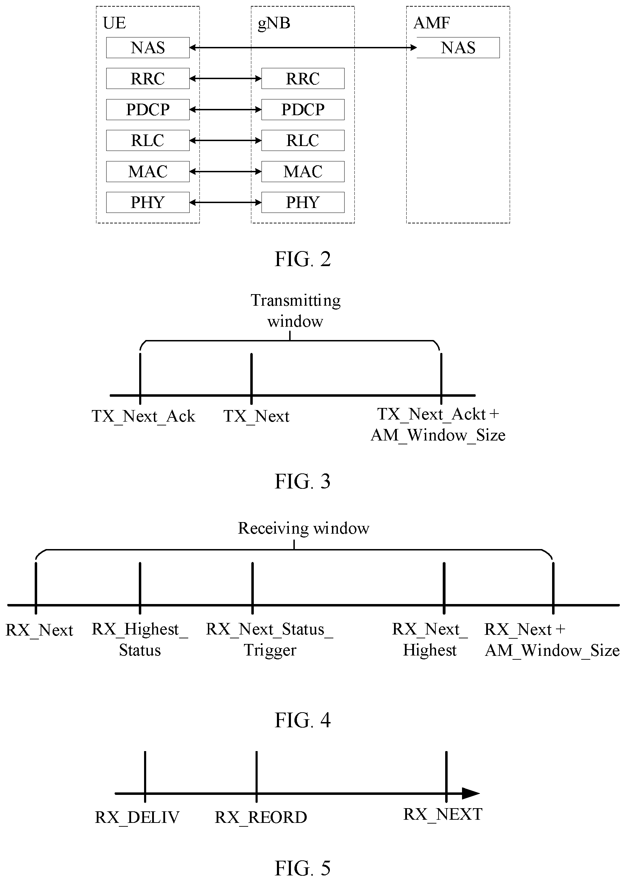

Refer to FIG. 2. In a control plane protocol framework, a user equipment (user equipment, UE) side may include a non-access stratum (non-access stratum, NAS) layer, a radio resource control (radio resource control, RRC) layer, a PDCP layer, an RLC layer, a MAC layer, and a PHY layer. A gNB side may include an RRC layer, a PDCP layer, an RLC layer, a MAC layer, and a PHY layer, and an access and mobility management function (access and mobility management function, AMF) side may include a NAS layer.

The NAS layer may be used for UE mobility and session management to establish and maintain an IP connection between the UE and a PDN GW.

Main services and functions of the RRC layer include broadcasting of non-access stratum (NAS) related system information, paging, RRC connection setup, maintenance, and release, access stratum (AS) related procedure between the UE and an E-UTRAN, security functions including key management, and setup, configuration, maintenance, and release of point-to-point radio bearers; and Broadcasting of system information of the NAS and AS layers, paging, RRC connection setup, maintenance, and release, end-to-end radio bearer setup, modification, and release, and mobility management including UE measurement reporting, cell handover, and UE cell selection and reselection. The RRC layer protocol terminates at an eNodeB.

The PDCP layer may be used to send or receive packet data of a peer PDCP entity. For example, the PDCP layer may compress and decompress an IP packet header, encrypt data and signaling, and protect signaling integrity.

The RLC layer is used for segmentation and connection, error correction, retransmission processing, and sequential transmission of higher layer data. The RLC layer has three modes: transparent mode (transparent mode, TM), unacknowledged mode (unacknowledged mode, UM), and acknowledged mode (acknowledged mode, AM). The AM mode can be used for a TCP service, such as file transfer. The UM mode can be used by higher layers to provide sequential transmission of data. The TM mode can be used for a special purpose, such as random access.

The MAC layer is used for mapping between a logical channel and a transport channel, schedules logical channels and allocates priorities based on QoS, and processes HARQ retransmission and uplink and downlink scheduling.

The PHY layer is used to process encoding and decoding, modulation and demodulation, multi-antenna mapping, and other telecommunication physical layer functions.

### 4. Transmitting window

Refer to FIG. 3. Status parameters of the transmitting window may include but are not limited to TX_Next_Ack, TX_Next, and AM_Window_Size.

TX_Next_Ack: This state variable holds the value of the SN of the next RLC SDU for which a positive acknowledgment is to be received in-sequence, and it serves as the lower edge of the transmitting window. It is initially set to 0, and is updated whenever the AM RLC entity receives a positive acknowledgment for an RLC SDU with SN = TX_Next_Ack.

The TX_Next_Ack state variable is an SN number of a next data packet of an acknowledged data packet received in sequence, and is the lower edge of the transmitting window. Once an SN of a received data packet is TX_Next_Ack, the TX_Next_Ack needs to be updated.

This may also be understood as follows: TX_Next_Ack is an RLC SN of an RLC SDU to be acknowledged, and RLC SDUs corresponding to RLC SNs less than a value of TX_Next_Ack have been acknowledged by a receive end. An initial value is 0, and is the lower edge of the transmitting window. In addition, the upper edge of the transmitting window is TX_Next_Ack + AM_Window_Size.

TX_Next: This state variable holds the value of the SN to be assigned for the next newly generated AMD PDU. It is initially set to 0, and is updated whenever the AM RLC entity constructs an AMD PDU with SN = TX_Next and contains an RLC SDU or the last segment of a RLC SDU.

The TX_Next state variable is an SN number of a next latest generated AMD PDU. Once an AM RLC entity forms an AMD PDU whose SN number is TX_Next, TX_Next is updated. The AMD PDU includes an RLC SDU or a segment of an RLC SDU.

This may also be understood as follows: The TX_Next state variable is an RLC SN of a to-be-sent RLC SDU, or a maximum value of an RLC SN of a sent RLC SDU plus 1, or an RLC SN of a next latest generated RLC SDU. If the SN of the RLC SDU formed by the AM RLC entity is equal to TX_Next, TX_Next may be updated. An initial value of TX_Next is 0.

AM_Window_Size: a size of an AM window. If a 12-bit SN is used, the size is 2048. When an 18-bit SN is used, the size is 131072.

It should be understood that a status parameter of the transmitting window may further include PDU_WITHOUT_POLL, BYTE_WITHOUT_POLL, RETX_COUNT, t_PollRetransmit, and the like. For details, refer to a related protocol. Details are not described herein again.

### 5. Receiving window

Refer to FIG. 4. Status parameters of the receiving window may include but are not limited to: RX_Next, RX_Next_Highest, AM_Window_Size, RX_Highest_Status, and RX_Next_Status_Trigger.

RX_Next: This state variable holds the value of the SN following the last in-sequence completely received RLC SDU, and it serves as the lower edge of the receiving window. It is initially set to 0, and is updated whenever the AM RLC entity receives an RLC SDU with SN = RX_Next.

The RX_Next state variable is a next SN of an SN of a latest RLC SDU completely received in sequence, and is the lower edge of the receiving window. Once the AM RLC entity receives a data packet whose SN is RX_Next, the AM RLC entity performs updating.

This may also be understood as follows: RX_Next is an RLC SN of a next to-be-received RLC SDU, RLC SDUs corresponding to RLC SNs less than a value of RX_Next have been completely received, and is the lower edge of the receiving window. If an RLC SN of an RLC SDU received by the AM RLC entity is the same as RX_Next, RX_Next may be updated. An upper edge of the receiving window is RX_Next + AM_Window_Size.

RX_Next_Highest: This state variable holds the value of the SN following the SN of the RLC SDU with the highest SN among received RLC SDUs. It is initially set to 0.

The RX_Next_Highest state variable is an SN number next to a highest SN number among SN numbers of received RLC SDUs. RX_Next_Highest is a maximum value of an RLC SN of a currently completely received RLC SDU plus 1, and an initial value of RX_Next_Highest is 0.

AM_Window_Size: a size of an AM window. If a 12-bit SN is used, the size is 2048. When an 18-bit SN is used, the size is 131072.

RX_Highest_Status: This state variable holds the highest possible value of the SN which can be indicated by "ACK_SN" when a STATUS PDU needs to be constructed. It is initially set to 0.

The RX_Highest_Status state variable is a highest possible SN number when a status PDU needs to be constructed, and this SN number may be indicated as "ACK_SN (acknowledgment feedback) ".

This may also be understood as follows: RX_Highest_Status is a maximum value of RLC SNs of RLC SDUs that have been completely received when a status report is sent, and is updated when a timer t-Reassembly expires or the received RLC SN is equal to a value of RX_Highest_Status. In other words, RX_Highest_Status may be a sequence number of a next data packet of a data packet latest completely received by the receive end.

RX_Next_Status_Trigger: This state variable holds the value of the SN following the SN of the RLC SDU which triggered t-Reassembly.

RX_Next_Status_Trigger is a next SN of an SN of an RLC SDU that triggers the reassembly timer.

This may also be understood as a value of RX_Next_Highest when the timer t-Reassembly expires.

t-Reassembly: reassembly timer. The status report is sent when the timer expires. Actual timeout time depends on the actual implementation, and the timer is continuously started cyclically.

t-StatusProhibit: a timer for disabling sending of the status report. This timer starts after the status report is sent. The status report can be sent only after the timer expires.

It should be understood that the status parameter of the receiving window may further include t-Reassembly, t-StatusProhibit, and the like. For details, refer to a related protocol. Details are not described herein again.

### 6. Status parameter of the PDCP layer

Refer to FIG. 5. Status parameters of a PDCP receive end may include RX_NEXT, RX_DELIV, RX_REORD, and the like.

RX_NEXT: This state variable indicates the COUNT value of the next PDCP SDU expected to be received. The initial value is 0.

RX_NEXT indicates a COUNT value of a next PDCP SDU expected to be received. This may also be understood as follows: RX_NEXT indicates a COUNT value of a next PDCP SDU that the PDCP needs to receive next.

RX_DELIV: This state variable indicates the COUNT value of the first PDCP SDU not delivered to the upper layers, but still waited for. The initial value is 0.

RX_DELIV indicates a COUNT value of a 1^{st} PDCP SDU that has not been submitted to an upper layer (for example, the SDAP layer). An initial value of RX_DELIV is 0.

RX_REORD: This state variable indicates the COUNT value following the COUNT value associated with the PDCP Data PDU which triggered t-Reordering. For target SRB configured with state variables continuation, the initial value is the value stored in PDCP entity for the corresponding source SRB. For source SRB configured with state variables continuation, the initial value is the value stored in PDCP entity for the corresponding target SRB.

RX_REORD indicates a COUNT value of a PDCP DATA PDU that triggers the reassembly timer.

It should be noted that, at the PDCP layer, a data packet is identified based on a COUNT value. An existing SA protocol defines the COUNT value as follows: The COUNT value is composed of an HFN and the PDCP SN. The size of the HFN part in bits is equal to 32 minus the length of the PDCP SN. For MRBs, HFN with a reference SN can be provided by upper layers. If provided, the initial value of HFN is set according to the HFN and the reference SN. Otherwise, the initial value of HFN is set by UE implementation.

This may be understood as follows: The COUNT value may include a hyperframe number (hyperframe number, HFN) and a PDCP SN. A size of the HFN part (for example, in bits) may be equal to 32 minus a length of the PDCP SN. The COUNT value may be used in the PDCP layer to maintain data integrity and encryption/decryption operations.

The following describes technical solutions of this application with reference to the accompanying drawings.

Descriptions in a current protocol of responding by the RLC to an upper layer (for example, PDCP) instructing discarding of an RLC SDU may include:
Description 1: When indicated from upper layer (e.g. PDCP) to discard a particular RLC SDU, the transmitting side of an AM RLC entity or the transmitting UM RLC entity shall discard the indicated RLC SDU, if neither the RLC SDU nor a segment thereof has been submitted to the lower layers. The transmitting side of an AM RLC entity shall not introduce an RLC SN gap when discarding an RLC SDU.
Description 2: RLC-AM is useful to limit data loss, however RLC-AM feedback or retransmission triggering mechanisms are not well adapted for short packet delay budgets applicable to XR traffic. Also, for RLC AM, considerable amounts of data may be in-flight, i.e. in the window, and there is no current way to avoid retransmitting this data, even if the data is old.

It can be learned from the foregoing description that, in the current protocol, after the RLC receives an instruction from the upper layer to discard a data packet (a data packet needing to be discarded is referred to as a to-be-discarded data packet below), if an RLC SDU or an RLC SDU segment corresponding to the to-be-discarded data packet has not been transmitted to the lower layer (such as the MAC layer and the PHY layer), the RLC may discard the SDU or RLC SDU segment. If the to-be-discarded data packet has been delivered to the lower layer, the RLC does not discard the to-be-discarded data packet. In this way, the to-be-discarded data packet is retransmitted by the transmit end, causing a waste of transmission resources.

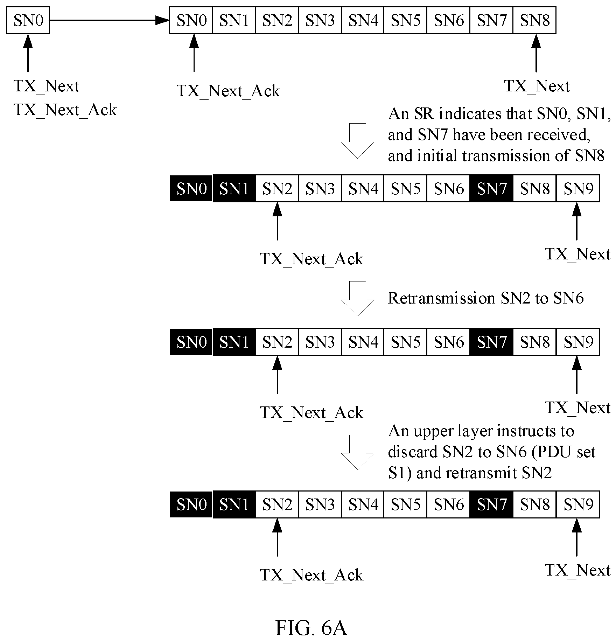

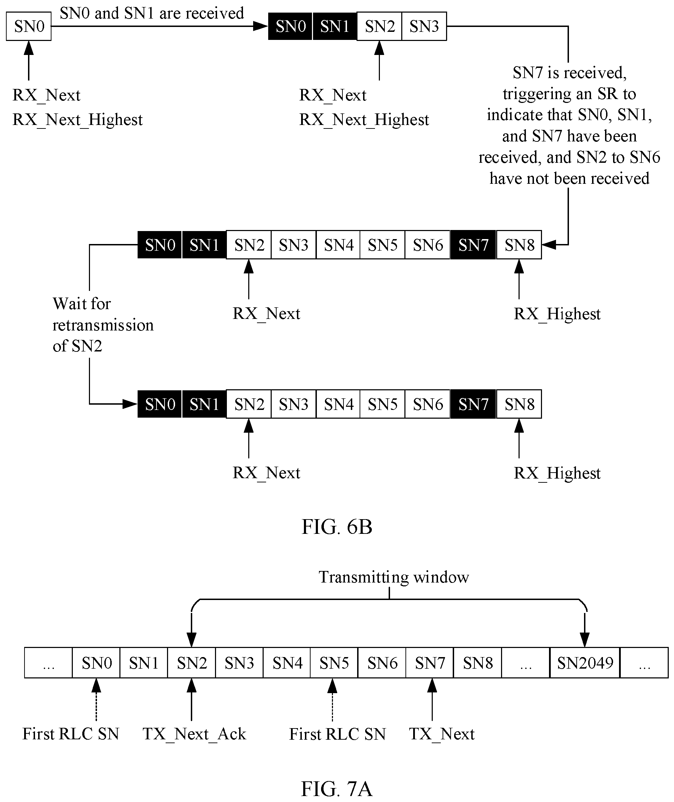

For example, with reference to FIG. 6A, assuming that the transmit end first sends RLC SDUs corresponding to SN0 to SN7, TX_Next_Ack=SN0, TX_Next = SN8. If the status report (state report, SR) received by the transmit end indicates that the receive end has completely received RLC SDUs corresponding to SN0, SN1, and SN7, and has not completely received (not received or incompletely received) RLC SDUs corresponding to SN2 to SN6, the transmit end may initially transmit an RLC SDU corresponding to SN8 and retransmit RLC SDUs corresponding to SN2 to SN6, update TX_Next_Ack to SN2, and update TX_Next to SN9. If the transmit end determines that RLC SNs of RLC SDUs corresponding to to-be-discarded data packets are SN2 to SN6, because the RLC SDUs corresponding to SN2 to SN6 are within the transmitting window and have been delivered to the lower layer, according to protocol specifications, the transmit end cannot perform discarding processing on the RLC SDUs corresponding to SN2 to SN6. The RLC SDUs corresponding to SN2 to SN6 are not all sent to the receive end, and the transmit end still needs to continue to retransmit the RLC SDUs corresponding to SN2 to SN6. Correspondingly, with reference to FIG. 6B, after receiving SDUs corresponding to SN0 and SN1, the receive end may update RX_Next from SN0 to SN2. In this case, RX_Next_Highest is SN8. After receiving the RLC SDU corresponding to SN7, the receive end may send, to the transmit end, an SR indicating that the RLC SDUs corresponding to SN0, SN1, and SN7 have been completely received and the RLC SDUs corresponding to SN2 to SN6 have not been completely received, and waits for retransmission of the RLC SDU corresponding to SN2. In this way, data transmission efficiency between the transmit end and the receive end is affected.

In view of this, this application provides a communication method. In the method, after determining a to-be-discarded data packet, a device (for example, a transmit end or a receive end) may discard the data packet, and update a transmission status parameter (for example, a status parameter of a transmitting window at the transmit end, a status parameter of a receiving window at the receive end, and a status parameter of a PDCP layer at the receive end) after the data packet is discarded, to improve quality of communication between devices.

In some embodiments, the to-be-discarded data packet may be an SDU, or may be a PDU. This is not limited herein.

In some embodiments, the to-be-discarded data packet may be a data packet of an RLC layer, or may be a data packet of the PDCP layer, or may be a data packet of another layer. This is not limited herein.

For ease of understanding, the following is first described.

### Data packet discard condition

In some embodiments, a device (for example, the transmit end) discards a data packet A (a to-be-discarded data packet) according to a first condition. The discard condition may be whether the data packet A is within a transmission window range, and further may be whether an SN number corresponding to the data packet A is within the transmission window range. The transmission window may be a window corresponding to or included in a transmitting window, or a window corresponding to or included in a receiving window.

For example, an RLC protocol layer is used as an example. The data packet A is a data packet that has been delivered by the RLC protocol layer to a lower layer (for example, a MAC protocol layer), and the data packet A is a data packet that needs to be discarded and that is sent by the PDCP layer to RLC. Therefore, an RLC layer of the transmit end discards a data packet that has been delivered to the lower layer, to avoid retransmission of the data packet, which causes a waste of resources.

For example, when the data packet A is within the transmission window range, the device may discard the data packet A. When the data packet A is not within the transmission window range, the device does not need to discard the data packet A, that is, does not need to perform any action. Because data packets outside the transmission window do not need to be maintained, these data packets do not need to be processed.

In some embodiments, corresponding to the RLC layer of the transmit end, the data packet A may be an RLC SDU or an RLC PDU. The discard condition may include that a first RLC SN corresponding to the data packet A meets: TX_Next_Ack ≤ First RLC SN ≤ TX_Next. The transmit end may discard the data packet A when the first RLC SN meets the TX_Next_Ack ≤ First RLC SN ≤ TX_Next; otherwise, no action is performed.

For example, with reference to FIG. 7A, it is assumed that a lower edge of the transmitting window is SN2, and an upper edge of the transmitting window is SN2049, and TX_Next = SN7. If the first RLC SN is less than SN2 (for example, is SN0) or the first RLC SN is greater than SN7 (for example, is SN8), it is determined that the discard condition is not met, and no action is performed. If the first RLC SN is greater than or equal to SN2, less than or equal to SN7, and greater than SN7 (for example, is SN8), the transmit end may determine that the discard condition is met, and discard the data packet A.

In some other embodiments, corresponding to the RLC layer of the transmit end, the discard condition may further include another condition. For example, the first RLC SN corresponding to the data packet A meets: TX_Next_Ack ≤ First RLC SN, or First RLC SN ≤ TX_Next.

In some embodiments, corresponding to an RLC layer of the receive end, the discard condition may include that the first RLC SN corresponding to the data packet A meets: RX_Next ≤ First RLC SN ≤ RX_Next_Highest. The receive end may discard the data packet A when the first RLC SN meets RX_Next ≤ First RLC SN ≤ RX_Next_Highest; otherwise, no action is performed.

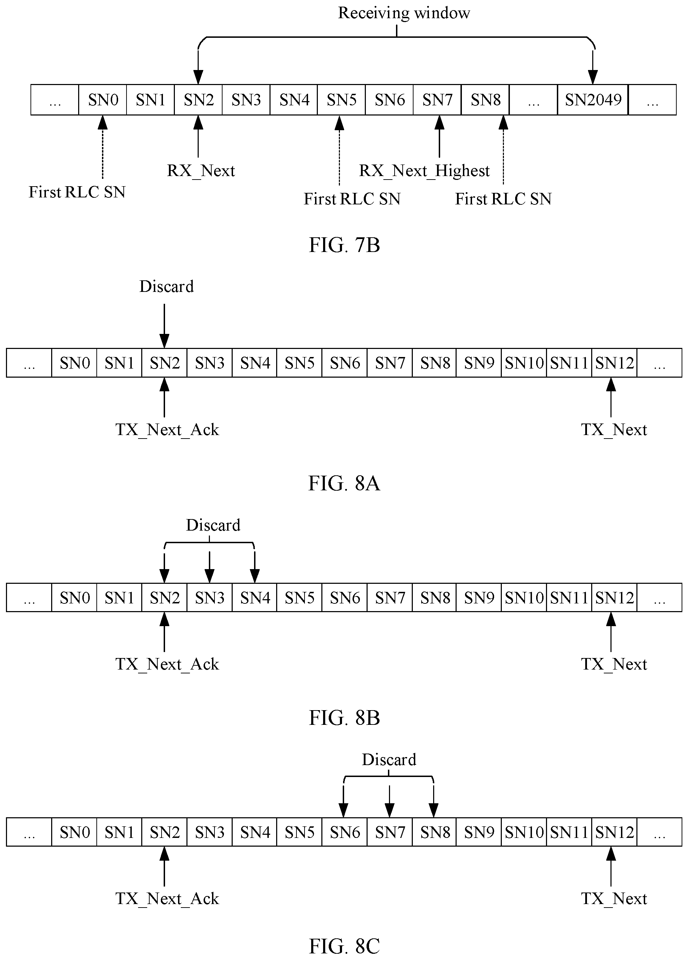

For example, with reference to FIG. 7B, it is assumed that RX_Next in the receiving window is SN2 and RX_Next_Highest = SN7. If the first RLC SN is less than SN2 (for example, is SN0) or the first RLC SN is greater than SN7 (for example, is SN8), it is determined that the discard condition is not met, and no action is performed. If the first RLC SN is greater than or equal to SN2 and less than or equal to SN7 (for example, is SN5), the receive end may determine that a discard condition is met, and discard the data packet A.

In some embodiments, corresponding to the RLC layer of the receive end, the discard condition may include that the first RLC SN corresponding to the data packet A meets: RX_Next ≤ First RLC SN ≤ RX_Highest_status. The receive end may discard the data packet A when RX_Next ≤ First RLC SN ≤ RX_Highest_status; otherwise, no action is performed.

In some embodiments, corresponding to the RLC layer of the receive end, the discard condition may include that the first RLC SN corresponding to the data packet A meets: RX_Next ≤ First RLC SN ≤ RX_Next_status_trigger. The receive end may discard the data packet A when RX_Next ≤ First RLC SN ≤ RX_Next_status_trigger; otherwise, no action is performed.

In some other embodiments, corresponding to the RLC layer of the receive end, the discard condition may further include another condition. For example, the first RLC SN corresponding to the data packet A meets: RX_Next ≤ First RLC SN, or First RLC SN ≤ RX_Next _Highest, or First RLC SN ≤ RX_Highest_status, or First RLC SN ≤ RX_Next_status_trigger. When the first RLC SN is greater than RX_Highest_status, RX_NEXT_Highest may be updated, for example, RX_NEXT_Highest is updated to a largest SN number of the discarded data packet.

In some embodiments, corresponding to the PDCP layer of the receive end, the discard condition may include that a first COUNT value corresponding to the data packet A meets: RX_DELIV ≤ First COUNT value ≤ RX_NEXT. The receive end may discard the data packet A when RX_DELIV ≤ First COUNT value ≤ RX_NEXT; otherwise, no action is performed.

In some other embodiments, corresponding to the PDCP layer of the receive end, the discard condition may further include another condition, for example, the first COUNT value corresponding to the data packet A meets: RX_DELIV ≤ First COUNT value, or First COUNT value ≤ RX_NEXT. When the first COUNT value is greater than RX_NEXT, RX_NEXT may be updated, for example, RX_NEXT is updated to a largest SN number of the discarded data packet.

After the data packet A is discarded (for example, the data packet A is discarded if the data packet A meets the foregoing discard condition, or the data packet A is directly discarded based on existing protocol logic), the device may further update the transmission status parameter. The following is described.

### Condition for updating a transmission status parameter

In some embodiments, the device (for example, the transmit end or the receive end) updates a transmission status parameter based on an update condition. The update condition may be whether the discarded data packet is within the transmission window range, and further may be whether the SN number corresponding to the discarded data packet is within the transmission window range.

In some embodiments, the transmission status parameter may include the status parameter of the transmitting window (for example, TX_Next_Ack), the status parameter of the receiving window (for example, RX_Next, RX_Highest_Status, and RX_Next_Status_Trigger), and the status parameter of the PDCP layer (for example, RX_DELIV and RX_REORD).

It should be understood that, in some other embodiments, the transmission status parameter may also be another parameter that has a same or similar function as the foregoing TX_Next_Ack, RX_Next, RX_Highest_Status, RX_Next_Status_Trigger, RX_DELIV, and RX_REORD, and the another parameter may have a different name from the foregoing parameters.

For example, the RLC protocol layer is used as an example. Corresponding to the RLC layer of the transmit end, the update condition may include that the first RLC SN corresponding to the data packet A (discarded data packet) meets: TX_Next_Ack ≤ First RLC SN ≤ TX_Next. The transmit end may update the status parameter (for example, TX_Next_Ack) of the transmitting window when the first RLC SN meets: TX_Next_Ack ≤ First RLC SN ≤ TX_Next; otherwise, no action is performed. A specific process in which the transmit end updates the status parameter of the transmitting window is described below, and details are not described herein again.

For example, with reference to the foregoing FIG. 7A, it is assumed that a lower edge of the transmitting window is SN2, and the upper edge of the transmitting window is SN2049, and TX_Next = SN7. If the first RLC SN is less than SN2 (for example, is SN0) or the first RLC SN is greater than SN7 (for example, is SN8), it is determined that the discard condition is not met, and no action is performed. If the first RLC SN is greater than or equal to SN2, less than or equal to SN7, and greater than SN7 (for example, is SN8), the transmit end may determine that the discard condition is met, and update the status parameter of the transmitting window.

In some other embodiments, corresponding to the RLC layer of the transmit end, the update condition may further include another condition. For example, the first RLC SN corresponding to the data packet A meets: TX_Next_Ack ≤ First RLC SN, or First RLC SN ≤ TX_Next.

Corresponding to the RLC layer of the receive end, the update condition may include that a second RLC SN corresponding to a data packet B (a discarded data packet, such as a data packet discarded and/or a data packet to be discarded by the transmit end, where the data packet B may be an RLC SDU or an RLC PDU) meets: RX_Next ≤ Second RLC SN ≤ RX_Next_Highest. The receive end may update the status parameter (for example, RX_Next, RX_Highest_Status, and RX_Next_Status_Trigger) of the receiving window when the first RLC SN meets RX_Next ≤ second RLC SN ≤ RX_Next_Highest; otherwise, no action is performed. A specific process in which the receive end updates the status parameter of the receiving window is described below, and details are not described herein again.

For example, with reference to the foregoing FIG. 7B, it is assumed that RX_Next in the receiving window is SN2 and RX_Next_Highest = SN7. If the second RLC SN is less than SN2 (for example, is SN0) or the second RLC SN is greater than SN7 (for example, is SN8), it is determined that a second condition is not met, and no action is performed. If the second RLC SN is greater than or equal to SN2 and less than or equal to SN7 (for example, is SN5), the receive end may determine that the second condition is met, and update the status parameter of the receiving window.

In some embodiments, corresponding to the RLC layer of the receive end, the update condition may include that the second RLC SN corresponding to the data packet B meets: RX_Next ≤ second RLC SN ≤ RX_Highest_status. The receive end may update the status parameter of the receiving window when RX_Next ≤ Second RLC SN ≤ RX_Highest_status; otherwise, no action is performed.

In some embodiments, corresponding to the RLC layer of the receive end, the update condition may include that the second RLC SN corresponding to the data packet B meets: RX_Next ≤ Second RLC SN ≤ RX_Next_status_trigger. The receive end may update the status parameter of the receiving window when RX_Next ≤ Second RLC SN ≤ RX_Next_status_trigger; otherwise, no action is performed.

In some other embodiments, corresponding to the RLC layer of the receive end, the update condition may further include another condition. For example, the first RLC SN corresponding to the data packet A meets: RX_Next ≤ First RLC SN, or First RLC SN ≤ RX_Next_Highest, or First RLC SN ≤ RX_Highest_status, or First RLC SN ≤ RX_Next_status_trigger.

In some embodiments, corresponding to the PDCP layer of the receive end, the update condition may include that a first COUNT value corresponding to a data packet C (a discarded data packet, such as a data packet discarded and/or a data packet to be discarded by the transmit end, where the data packet C may be a PDCP SDU or a PDCP PDU) meets: RX_DELIV ≤ First COUNT value ≤ RX_NEXT. The receive end may update the status parameter of the PDCP layer when RX_DELIV ≤ First COUNT value ≤ RX_NEXT; otherwise, no action is performed.

For example, corresponding to the PDCP layer of the receive end, the update condition may include that the first COUNT value corresponding to the data packet C meets: RX_DELIV ≤ First COUNT value ≤ RX_NEXT. The receive end may update the status parameter of the PDCP layer when RX_DELIV ≤ First COUNT value ≤ RX_NEXT; otherwise, no action is performed.

In some other embodiments, corresponding to the PDCP layer of the receive end, the update condition may further include another condition, for example, the first COUNT value corresponding to the data packet A meets: RX_DELIV ≤ First COUNT value, or First COUNT value ≤ RX_NEXT.

In some embodiments, the receive end may update the status parameter (for example, RX_NEXT, RX_DELIV, and RX_REORD) of the PDCP layer when RX_DELIV is equal to the first COUNT value corresponding to the data packet C. A specific process in which the receive end updates the status parameter of the PDCP layer is described below, and details are not described herein again.

When determining that the data packet meets the update condition or when determining that the data packet is discarded, the device may update the transmission status parameter.

The following is described.

### Process of updating the status parameter at the transmit end

In some embodiments, the transmit end updates the transmission status parameter of the transmit end based on the discarded data packet (a data packet discarded and/or a data packet to be discarded by the transmit end), and further updates the status parameter of the transmit end based on an SN number of the discarded data packet.

For example, corresponding to the transmit end, the transmission status parameter includes a TX_Next_Ack parameter of the transmitting window.

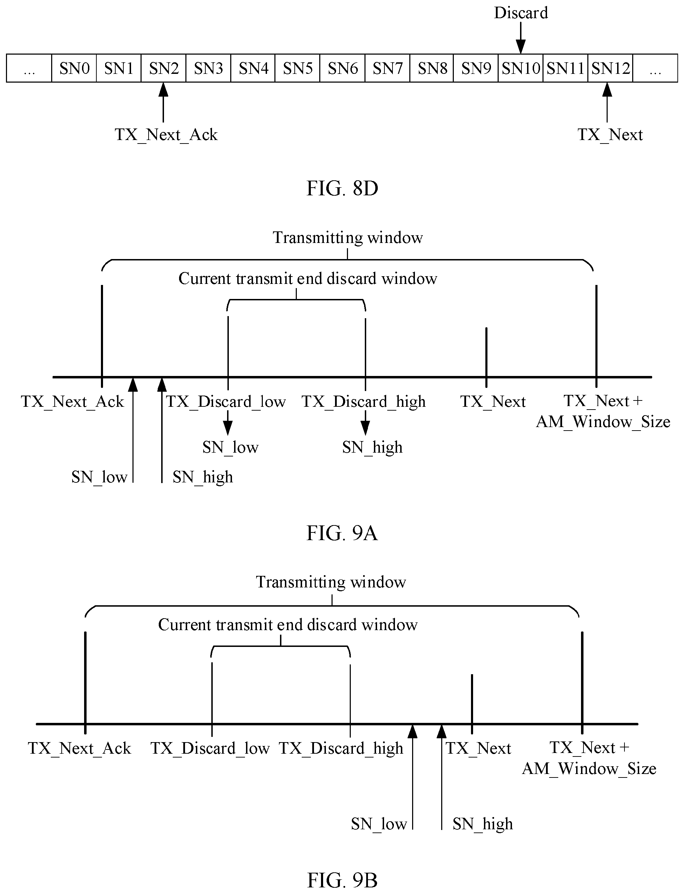

In some embodiments, the discarded data packet may include the data packet A, or a plurality of consecutive data packets using the data packet A as a 1^{st} data packet (data packets with consecutive sequence numbers (for example RLC SNs or PDCP SNs)). Correspondingly, a relationship between a discarded data packet and a transmitting window may correspond to the following several cases:
Case 1: The discarded data packet may include a plurality of consecutive data packets using the data packet A as the 1^{st} data packet, and an RLC SN corresponding to the data packet A is the same as an RLC SN corresponding to a lower edge TX_Next_Ack of the transmitting window. In this case, RLC SNs corresponding to the plurality of consecutive data packets using the data packet A as the 1^{st} data packet may be {TX_Next_Ack, ..., SN_high}, where TX_Next_Ack < SN_high ≤ TX_Next. For example, with reference to FIG. 8A, assuming that TX_Next_Ack = SN2, TX_Next = SN12, and the first RLC SN corresponding to the data packet A is SN2, the plurality of consecutive data packets using the data packet A as the 1^{st} data packet may be data packets corresponding to SN2, SN3, and SN4.
Case 2: The discarded data packet may include the data packet A, and an RLC SN of the data packet A is the same as an RLC SN corresponding to the lower edge TX_Next_Ack of the transmitting window. For example, with reference to FIG. 8B, it is assumed that TX_Next_Ack = SN2, TX_Next = SN12, and the RLC SN of the data packet A is SN2.
Case 3: The discarded data packet may include a plurality of consecutive data packets using the data packet A as the 1^{st} data packet, and an RLC SN corresponding to the data packet A is different from an RLC SN corresponding to a lower edge TX_Next_Ack of the transmitting window. In this case, RLC SNs corresponding to the plurality of consecutive data packets using the data packet A as the 1^{st} data packet may be {first RLC SN, ..., SN_high}, where TX_Next_Ack + 2 < SN_high ≤ TX_Next, and TX_Next_Ack + 1 < First RLC SN ≤ TX_Next - 1. For example, with reference to FIG. 8C, assuming that TX_Next_Ack = SN2, TX_Next = SN12, and the first RLC SN is SN6, the plurality of consecutive data packets using the data packet A as the 1^{st} data packet may be data packets corresponding to SN6, SN7, and SN8.
Case 4: The discarded data packet may include the data packet A, and an RLC SN of the data packet A is different from an RLC SN corresponding to the lower edge TX_Next_Ack of the transmitting window. In this case, the RLC SN of the data packet A may be any RLC SN greater than TX_Next_Ack and less than or equal to TX_Next. For example, with reference to FIG. 8D, assuming TX_Next_Ack = SN2 and TX_Next = SN12, the first RLC SN may be SN10.

In some embodiments, the foregoing cases 1 to 4 may coexist. For example, among the four cases shown in FIG. 8A to FIG. 8D, a plurality of cases may coexist.

Corresponding to Case 1 and Case 2, the transmit end may directly update the lower edge of the transmitting window to an RLC SN of a 1^{st} unacknowledged data packet after a data packet corresponding to an upper edge of an RLC SN corresponding to the discarded data packet (an RLC SN with a largest value among RLC SNs corresponding to discarded data packets), or to a next RLC SN of an upper edge of an RLC SN corresponding to the discarded data packet.

For example, the transmit end may update the lower edge of the transmitting window when the first RLC SN corresponding to the data packet A is the same as the lower edge (TX_Next_Ack) of the transmitting window (or the data packet A may be a data packet with an SN number corresponding to the TX_Next_Ack). The transmit end may update the lower edge of the transmitting window when one or more data packets in the discarded data packet have an RLC SN equal to the lower edge (TX_Next_Ack) of the transmitting window, or when one or more data packets in the discarded data packet have an RLC SN that includes the lower edge (TX_Next_Ack) of the transmitting window. For example, the transmit end may update the lower edge of the transmitting window to: a fourth RLC SN after a third RLC SN corresponding to a last data packet in consecutively discarded data packets using the data packet A as the 1^{st} data packet, or a fourth RLC SN after a third RLC SN corresponding to a last data packet in consecutively discarded data packets using a data packet with an SN number corresponding to TX_Next_Ack as the 1^{st} data packet, or a fourth RLC SN after a third RLC SN corresponding to a last data packet in consecutively discarded data packets including the data packet A. The third RLC SN may be an RLC SN with a largest value among RLC SNs corresponding to consecutively discarded data packets using the data packet A as the 1^{st} data packet. Alternatively, the third RLC SN may be an RLC SN with a largest value among RLC SNs corresponding to consecutively discarded data packets using a data packet corresponding to TX_Next_Ack as the 1^{st} data packet. Alternatively, the third RLC SN may be an RLC SN with a largest value among RLC SNs corresponding to consecutively discarded data packets including a data packet corresponding to TX_Next_Ack. For example, if the discarded data packet includes only the data packet A, the third RLC SN is the same as the first RLC SN. If the discarded data packet includes the plurality of consecutive data packets using the data packet A as the 1^{st} data packet, SNs corresponding to the plurality of consecutive data packets using the data packet A as the 1^{st} data packet are {first RLC SN, ..., third RLC SN}, where a data packet corresponding to the fourth RLC SN is not discarded. That is, the data packet corresponding to the fourth RLC SN is not in the discarded data packet.

In some embodiments, the fourth RLC SN may be a next RLC SN of the third RLC SN. In this case, if the transmit end has received an acknowledgment feedback (acknowledge, ACK) of the data packet corresponding to the fourth RLC SN, the transmit end may update the lower edge of the transmitting window to a next RLC SN of the fourth RLC SN based on an existing protocol.

It should be understood that the acknowledgment feedback is a message sent by the receive end to the transmit end by using a status report to indicate that a data packet (for example, an RLC SDU or an RLC PDU) has been successfully received by the receive end. Correspondingly, if the status report indicates that a receiving status of a data packet is NACK, it indicates that the data packet is not successfully received by the receive end. According to the existing protocol, after the status report is received, TX_Next_Ack is updated to a smallest RLC SN corresponding to a data packet without an acknowledgment feedback received in the status report (feedback for a received data packet sent by the receive end to the transmit end, indicating a reception acknowledgment or a reception failure).

In some embodiments, the fourth RLC SN may be a smallest RLC SN, among RLC SNs corresponding to data packets with no ACK received, after the data packet corresponding to the third RLC SN. Based on this manner, when the transmit end has received an ACK corresponding to one or more consecutive data packets after the third RLC SN, the transmit end may directly update the lower edge of the transmitting window to the fourth RLC SN, so that the transmit end does not need to update it again according to the existing protocol. A difference of this embodiment from the prior art lies in that the transmission status parameter needs to be updated with reference to the RLC SN corresponding to the discarded data packet as well as information about the status report.

In some embodiments, the data packet corresponding to the fourth RLC SN is not discarded, or the data packet corresponding to the fourth RLC SN is not in the discarded data packet. That is, if a data packet corresponding to a smallest RLC SN that is after the data packet corresponding to the third RLC SN and that is in RLC SNs corresponding to data packets with no ACK received is a data packet in discarded data packets, the fourth RLC SN may be an RLC SN corresponding to a data packet that is not in the discarded data packet and has no ACK received and that is after consecutive data packets including a smallest RLC SN (a data packet corresponding to the smallest RLC SN may be a 1^{st} data packet of the consecutive data packet, or may be a data packet in the middle of the consecutive data packets) in the discarded data packets. For example, it is assumed that RLC SNs of the discarded data packets are SN1, SN2, and SN3, as well as SN6, SN7, and SN8, the transmit end has received data packets whose RLC SNs are SN4 and SN5, and has not received (or has received) data packet whose RLC SNs are SN6, SN7, SN8, and SN9, and a smallest SN of a data packet, with no ACK received, after the consecutively discarded data packets SN1 to SN3 is SN6. However, SN6 is in the consecutively discarded data packets SN6 to SN8. Therefore, the transmit end may update the lower edge of the transmitting window to SN9. In one case, the transmit end may first update the lower edge of the transmitting window to SN4, and when determining that data packets whose RLC SNs are SN4 and SN5 have been completely received by the receive end and data packets corresponding to SN6, SN7, and SN8 are discarded data packets, update the lower edge of the transmitting window to SN9. In another case, after the TX_Next_Ack is updated to SN1, the transmit end may directly update the lower edge of the transmitting window to SN9 when determining that RLC SNs of the discarded data packets are SN1, SN2, and SN3, as well as SN6, SN7, and SN8, and data packets whose RLC SNs are SN4 and SN5 have been completely received by the receive end.

In some embodiments, the third RLC SN is greater than or equal to TX_Next_Ack and less than or equal to TX_Next.

In some embodiments, when the third RLC SN is greater than or equal to TX_Next_Ack, TX_Next_Ack has been updated to a next RLC SN of the second RLC SN.

In some embodiments, the third RLC SN is greater than or equal to (Second RLC SN + 1), and less than or equal to TX_Next.

For example, corresponding to the case shown in FIG. 8A, TX_Next_Ack = SN2, TX_Next = SN12, and an RLC SN corresponding to the discarded data packet is SN2 (used as the first RLC SN and the third RLC SN). If the transmit end has not completely received an ACK of the data packet corresponding to SN3, the transmit end may update TX_Next_Ack to SN3 (used as the fourth RLC SN). If the transmit end has completely received the ACK of the data packet corresponding to SN3 and has not completely received an ACK of the data packet corresponding to SN4, the transmit end may directly update TX_Next_Ack to SN4; or first update TX_Next_Ack to SN3 and then update it to SN4 (used as the fourth RLC SN) based on the existing protocol.

For another example, corresponding to the case shown in FIG. 8B, TX_Next_Ack = SN2, TX_Next = SN12, RLC SNs corresponding to the discarded data packets are SN2 to SN4, and the third RLC SN is SN4. If the transmit end has not completely received an ACK of the data packet corresponding to SN5, the transmit end may update TX_Next_Ack to SN5 (used as the fourth RLC SN). If the transmit end has completely received the ACK of the data packet corresponding to the SN5 and has not completely received an ACK of the data packet corresponding to SN6, the transmit end may directly update TX_Next_Ack to SN6 (used as the fourth RLC SN); or first update TX_Next_Ack to SN5 and then update it to SN6 based on the existing protocol.

Corresponding to Case 3 or Case 4, the transmit end may update the lower edge of the transmitting window in a case in which TX_Next_Ack is updated to be the same as the first RLC SN corresponding to the data packet A. For example, the transmit end may update the lower edge of the transmitting window to: a fourth RLC SN after a third RLC SN corresponding to a last data packet in consecutively discarded data packets using the data packet A as the 1^{st} data packet.

In some embodiments, the case in which TX_Next_Ack is updated to be the same as the first RLC SN corresponding to the data packet A includes: TX_Next_Ack is updated to a smallest RLC SN corresponding to a received data packet with no acknowledgment feedback received in the status report after the status report is received. When updated TX_Next_Ack is the same as the first RLC SN, the transmit end may update the status parameter of the transmitting window. For details, refer to the manners of updating the status parameter of the transmitting window in the foregoing Case 1 and Case 2. Details are not described herein again.

In some embodiments, the fourth RLC SN may be a next RLC SN of the third RLC SN, or a smallest RLC SN, among RLC SNs corresponding to data packets U with no ACK received, after the data packet corresponding to the third RLC SN.

For another example, corresponding to the case shown in FIG. 8C, TX_Next_Ack = SN2, TX_Next = SN12, RLC SNs corresponding to the discarded data packets are SN6 to SN8, the first RLC SN is SN6, and the third RLC SN is SN8). The transmit end may update TX_Next_Ack to SN9 (used as the fourth RLC SN) when TX_Next_Ack is updated to SN6 and the transmit end has not completely received an ACK of a data packet corresponding to SN9. Alternatively, when TX_Next_Ack is updated to SN6 and the transmit end has completely received the ACK of the data packet corresponding to SN9 and has not completely received an ACK of a data packet corresponding to SN10, the transmit end may update TX_Next_Ack to SN10 (used as the fourth RLC SN). In some embodiments, if the transmit end updates TX_Next_Ack to an RLC SN (for example, SN10) after SN9 based on the status report, the status parameter of the transmitting window does not need to be updated based on the discarded data packet.

For example, corresponding to the case shown in FIG. 8D, TX_Next_Ack = SN2, TX_Next = SN12, and an RLC SN corresponding to the discarded data packet is SN10 (used as the first RLC SN and the third RLC CN). The transmit end may update TX_Next_Ack to SN11 when TX_Next_Ack is updated to SN10 and the transmit end has not completely received an ACK of a data packet corresponding to SN11. The transmit end may update TX_Next_Ack to SN12 when TX_Next_Ack is updated to SN10 and the transmit end has completely received the ACK of the data packet corresponding to SN11 and has not completely received an ACK of a data packet corresponding to SN12. In some embodiments, if the transmit end updates TX_Next_Ack to an RLC SN (for example, SN11) after SN10 based on the status report, the status parameter of the transmitting window does not need to be updated based on the discarded data packet.

As shown in FIG. 8A to FIG. 8D, a data packet corresponding to updated TX_Next_Ack is not discarded.

If a plurality of cases of the foregoing cases shown in FIG. 8A to FIG. 8D appear, the transmit end may further update the status parameter of the transmit end based on the plurality of cases.

For example, assuming the cases shown in FIG. 8B and FIG. 8C coexist, if a data packet corresponding to SN5 has not been completely received by the receive end (for example, the transmit end has not received an acknowledgment feedback of the data packet corresponding to SN5), the transmit end may first update the lower edge of the transmitting window to SN5, and then update the lower edge of the transmitting window to SN9 after updating TX_Next_Ack to SN6.

For another example, assuming that the cases shown in FIG. 8B and FIG. 8C coexist, if the data packet corresponding to SN5 has been completely received by the receive end (for example, the transmit end has received an acknowledgment feedback of the data packet corresponding to SN5), the transmit end may first update the lower edge of the transmitting window to SN6, and after TX_Next_Ack is updated to SN6, update the lower edge of the transmitting window to SN9 based on the consecutively discarded data packets (data packets corresponding to SN6 to SN8). The transmit end may further directly update the lower edge of the transmitting window to SN9 when determining that the data packet corresponding to SN5 is completely received by the receive end and a data packet corresponding to SN6 is a discarded data packet.

In some embodiments, the transmit end may update the status parameter of the transmitting window by maintaining a discard window of the transmit end. The transmit end discard window may include a first discard status parameter (for example, TX_Discard_Low) and a second discard status parameter (for example, TX_Discard_High). The first discard status parameter is used to indicate a lower edge (for example, an RLC SN with a smallest value among RLC SNs corresponding to consecutively discarded data packets) of the consecutively discarded data packets U. The second discard status parameter is used to indicate an upper edge (for example, an RLC SN with a largest value among RLC SNs corresponding to the consecutively discarded data packets) of the consecutively discarded data packets. Then, the transmit end may update the status parameter of the transmitting window based on a relationship between the lower edge of the transmitting window and the first discard status parameter and the second discard status parameter.

### Process of maintaining the transmit end discard window

In some embodiments, the transmit end discard window is used to indicate a data packet with a smallest value among RLC SNs corresponding to discarded data packets, or a plurality of consecutive discarded data packets in which a data packet with the smallest value among the RLC SNs corresponding to the discarded data packets is located. For example, assuming that RLC SNs corresponding to discarded data packets are SN2, SN5, SN8, and SN9, TX_Discard_High = TX_discard_low = SN2. For another example, assuming that RLC SNs corresponding to discarded data packets are SN2, SN3, SN4, SN8, and SN9, TX_Discard_High = SN4, and TX_discard_low = SN2.

In some embodiments, if the transmit end already determines that TX_Discard_High and TX_discard_low exist, and RLC SNs (one RLC SN or a plurality of consecutive RLC SNs) corresponding to discarded data packets that a PDCP layer requests to discard are all less than the current TX_discard_low, the transmit end may update TX_Discard_High to an upper edge of the RLC SNs corresponding to the data packets that the PDCP layer requests to discard, and update TX_discard_low to a lower edge of the RLC SNs corresponding to the data packets that the PDCP layer requests to discard.

In some embodiments, if the transmit end already determines that TX_Discard_High and TX_discard_low exist, and RLC SNs (one RLC SN or a plurality of consecutive RLC SNs) corresponding to data packets that the PDCP layer requests to discard are all greater than the current TX_discard_high, the transmit end may not update TX_Discard_High or TX_discard_low.

In some embodiments, if the transmit end already determines that TX_Discard_High and TX_discard_low exist, and RLC SNs corresponding to data packets that the PDCP layer requests to discard overlap [TX_discard_low, TX_Discard_High] and may be superimposed into a consecutive RLC SN interval, the transmit end may update TX_Discard_High to an upper edge (a maximum value of the consecutive RLC SN interval) of the consecutive RLC SN interval, and update TX_discard_low to a lower edge (a minimum value of the consecutive RLC SN interval) of the consecutive RLC SN interval.

For example, FIG. 9A to FIG. 9E are schematic diagrams in which the transmit end updates a transmit end discard window according to some embodiments of this application.

It is assumed that the transmit end already determines that TX_Discard_High and TX_discard_low (a determined transmit end discard window corresponding to TX_Discard_High and TX_discard_low is referred to as a current transmit end discard window) exist, an upper edge of RLC SNs of data packets that the PDCP layer requests to discard is SN_high, and a lower edge thereof is SN_low ≤ SN_high. The transmit end may update a status parameter of the transmit end discard window based on a relationship between SN_high and SN_low and the current transmit end discard window.

With reference to FIG. 9A, if SN_high is less than TX_discard_low, it indicates that all RLC SNs corresponding to the data packets requested to be discarded are less than TX_discard_low, the data packets requested to be discarded do not overlap the current discard window, and the transmit end may update TX_discard_low to SN_low and update TX_discard_high to SN_high.

With reference to FIG. 9B, if SN_low is greater than TX_discard_high, it indicates that all RLC SNs corresponding to the data packets requested to be discarded are greater than TX_discard_high, and the transmit end does not need to update the transmit end discard window.

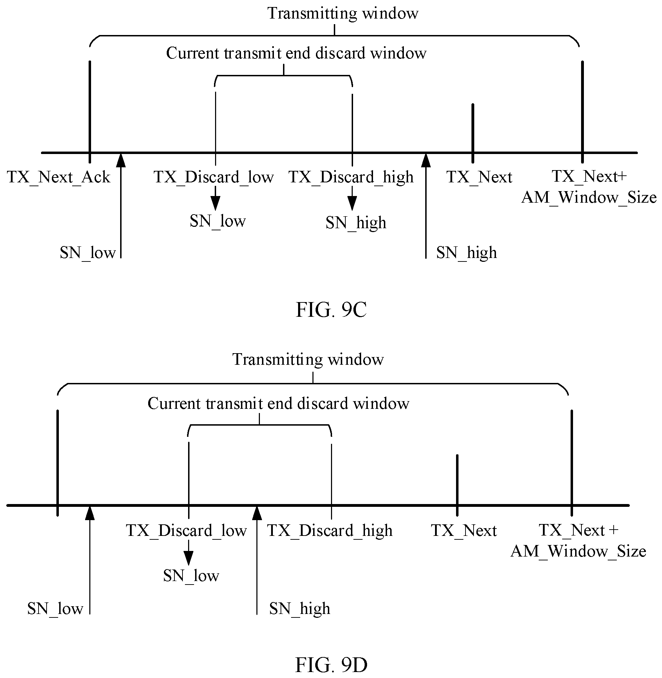

With reference to FIG. 9C, if SN_high is greater than or equal to TX_discard_high and SN_low is less than or equal to TX_discard_low, it indicates that the data packets requested to be discarded include the current transmit end discard window, and the transmit end may update TX_discard_low to SN_low and update TX_discard_high to SN_high.

With reference to FIG. 9D, if SN_high is greater than or equal to TX_discard_low and less than or equal to TX_discard_high, and SN_low is less than TX_discard_low, it indicates that the data packet requested to be discarded and the current transmit end discard window form new consecutive data packets, and the transmit end may update TX_discard_low to SN_low.

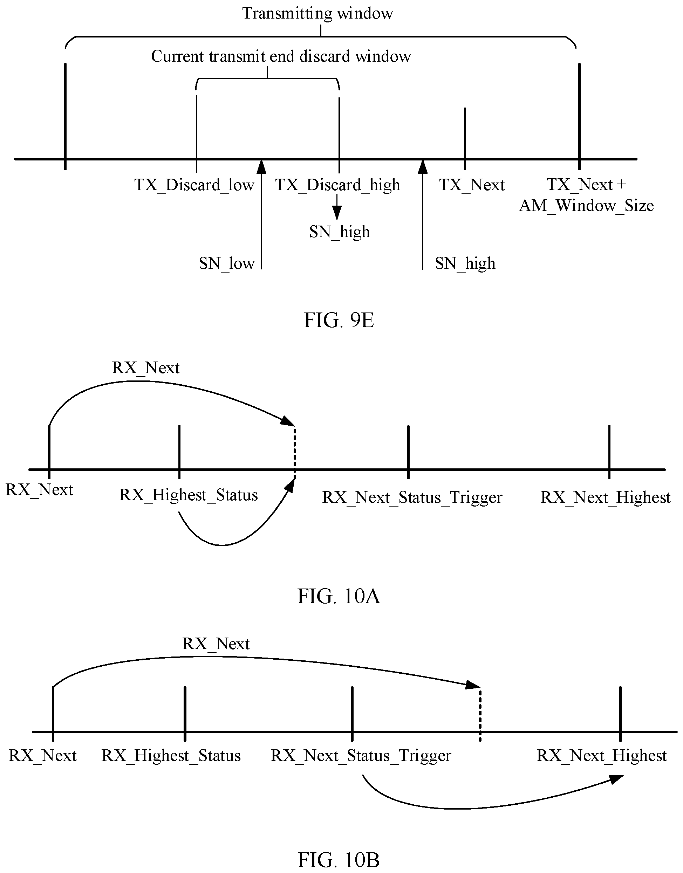

With reference to FIG. 9E, if SN_low is greater than TX_discard_low and less than or equal to TX_discard_high, and SN_high is greater than TX_discard_high, it indicates that the data packets requested to be discarded and the current transmit end discard window form new consecutive data packets, and the transmit end may update TX_discard_high to SN_high.

In some embodiments, if updated TX_discard_high is greater than Tx_Next, the transmit end may update TX_discard_high to Tx_Next. Alternatively, when TX_discard_high needs to be updated to SN_high, if SN_high is greater than Tx_Next, the transmit end may update TX_discard_high to Tx_Next.

### Process in which the transmit end updates the status parameter of the transmitting window based on a status parameter of the transmit end discard window

When determining that a lower edge (Tx_Next_Ack) of the transmitting window is the same as a lower edge (TX_discard_low) of the transmit end discard window, the transmit end may update the lower edge of the transmitting window to an RLC SN subsequent to an upper edge (TX_discard_high) of the transmit end discard window, or an RLC SN of a 1^{st} data packet, with an ACK received, after the upper edge (TX_discard_high) of transmit end discard window.

In some embodiments, after the lower edge (TX_Next_Ack) of the transmitting window is updated, if there are still discarded data packets in the current transmitting window, the transmit end may update or maintain TX_discard_low and TX_discard_high based on the discarded data packets in the transmitting window. For a specific update manner, refer to the foregoing content of maintaining the transmit end discard window. Details are not described herein again.

In some embodiments, if an updated lower edge of the transmitting window is greater than Tx_Next, the transmit end may update the lower edge of the transmitting window to Tx_Next.

In some embodiments, after the status parameters of the transmitting window have been updated based on the current transmit end discard window (for example, the lower edge of the transmitting window has been updated to an RLC SN subsequent to the upper edge (TX_discard_high) of the transmit end discard window, or an RLC SN of a 1^{st} data packet, with no ACK received, after the upper edge (TX_discard_high) of the transmit end discard window), if there is still a discarded data packet, the transmit end may update or establish a transmit end discard window based on embodiments shown in FIG. 9A to FIG. 9E, and update the status parameter of the transmitting window based on the updated or established transmit end discard window.

In some embodiments, the transmit end may alternatively update the status parameter of the transmitting window based on the existing protocol (for example, the TS28.322 protocol), instead of updating the status parameter of the transmitting window based on the RLC SN corresponding to the discarded data packet. Specifically, in this embodiment, after or in a process of discarding the to-be-discarded data packet, the transmit end may send, to the receive end, discard information indicating a discarded data packet (for example, a data packet discarded and/or a data packet to be discarded by the transmit end). After receiving the discard information, the receive end may send a status report to the transmit end, where the status report includes a receiving status (for example, an ACK) of a data packet that has been discarded by the transmit end or a data packet corresponding to a to-be-discarded data packet. After receiving the status report, the transmit end may update the lower edge Tx_Next_Ack of the transmitting window to a smallest RLC SN among RLC SNs corresponding to data packets with no ACK received. In this way, a process in which the transmit end updates the transmitting window does not need to be modified.

The following is described.

### Process in which the receive end updates a status parameter

In some embodiments, the receive end may update the status parameter of the receive end based on a data packet discarded and/or a data packet to be discarded by the transmit end, and further update the status parameter of the transmit end based on an SN number of the data packet discarded or the data packet to be discarded by the transmit end, or further update the status parameter of the transmit end based on a COUNT value of the discarded data packet and/or the to-be-discarded data packet.

In some embodiments, the receive end may update a status parameter of the RLC layer, for example, RX_Next, RX_Highest_Status, and RX_Next_Status_Trigger. The receive end may also update a status parameter of the PDCP layer, for example, RX_DELIV and RX_REORD.

### Process in which the receive end updates the status parameter of the RLC layer

For example, the RLC layer is used for description. When the second RLC SN corresponding to the data packet B is equal to the lower edge (RX_Next) of the receiving window (or the data packet B may be a data packet with an SN number corresponding to RX_Next, or an RLC SN corresponding to one or more data packets in discarded data packets is equal to the lower edge (RX_Next) of the receiving window, or if RLC SNs corresponding to one or more data packets in discarded data packets include the lower edge (RX_Next) of the receiving window, the receive end may update the lower edge of the receiving window. The data packet B is a data packet that has been discarded by the transmit end or is to be discarded by the transmit end (that is, the discarded data packet described above) and is determined by the receive end, and may be indicated by the transmit end to the receive end.

For example, the receive end may update the lower edge of the receiving window to: a sixth RLC SN(in some embodiments, a data packet corresponding to the sixth RLC SN is not discarded) after a fifth RLC SN corresponding to a last data packet in discarded consecutive data packets using the data packet B as the 1^{st} data packet, or an RLC SN (in some embodiments, a data packet corresponding to the RLC SN is not discarded) after an RLC SN corresponding to a last data packet in consecutive discarded data packets including a data packet with an SN number corresponding to RX_Next. The fifth RLC SN may be an RLC SN with a largest value among RLC SNs corresponding to the discarded consecutive data packets using the data packet B as the 1^{st} data packet, or the fifth RLC SN may be an RLC SN with a largest value among RLC SNs corresponding to discarded consecutive data packets that include the data packet B. For example, if the discarded data packet includes only the data packet B, the fifth RLC SN is the same as the second RLC SN. If the discarded data packets include a plurality of consecutive data packets using the data packet B as the 1^{st} data packet, SNs corresponding to the plurality of consecutive data packets using the data packet B as the 1^{st} data packet are {second RLC SN, ..., fifth RLC SN}.

In some embodiments, the data packet corresponding to the sixth RLC SN is not discarded, or the data packet corresponding to the sixth RLC SN is not in the discarded data packet. That is, if a data packet corresponding to a smallest RLC SN that is after the data packet corresponding to the fifth RLC SN and that is in RLC SNs corresponding to data packets not completely received is a data packet in discarded data packets, the sixth RLC SN may be an RLC SN corresponding to a 1^{st} incompletely received data packet that is not in the discarded data packets and that is after consecutive data packets including a smallest RLC SN (a data packet corresponding to the smallest RLC SN may be a 1^{st} data packet of the consecutive data packet, or may be a data packet in the middle of the consecutive data packets) in the discarded data packets.

For example, assuming that RLC SNs of the discarded data packets are SN1, SN2, and SN3, as well as SN6, SN7, and SN8, and the receive end has received data packets whose RLC SNs are SN4 and SN5 and has not completely received (or has completely received) data packets whose RLC SNs are SN6, SN7, SN8, and SN9, the receive end may update the lower edge of the receiving window to SN9. In one case, the receive end may first update the lower edge of the receiving window to SN4, and when determining that data packets whose RLC SNs are SN4 and SN5 have been completely received and data packets corresponding to SN6, SN7, and SN8 are discarded data packets, update the lower edge of the receiving window to SN9. In another case, after the lower edge of the receiving window is updated to SN1, the receive end may directly update the lower edge of the receiving window to SN9 when determining that RLC SNs of the discarded data packets are SN1, SN2, and SN3, as well as SN6, SN7, and SN8, and data packets whose RLC SNs are SN4 and SN5 have been completely received.

In some embodiments, the sixth RLC SN may be a next RLC SN of the fifth RLC SN.

In one case, if the receive end has completely received the data packet corresponding to the sixth RLC SN, or the receive end has sent an acknowledgment feedback (acknowledge, ACK) of the data packet corresponding to the sixth RLC SN to the transmit end, the receive end may update the lower edge of the receiving window to a next RLC SN of the sixth RLC SN or an RLC SN after the sixth RLC SN based on the existing protocol.

In one case, if the receive end has completely received the data packet corresponding to the sixth RLC SN and a data packet after the sixth RLC SN, the receive end may update, based on the existing protocol, the lower edge of the receiving window to an SN number of a 1^{st} incompletely received data packet after the sixth RLC SN. The existing protocol includes: updating RX_Next to an RLC SN number corresponding to the 1^{st} incompletely received data packet after RX_Next when a data packet is completely received (that is, all bytes of the data packet have been received) and an RLC SN of the data packet is equal to RX_Next. In this embodiment, RX_Next is first updated to a next RLC SN of the fifth RLC SN, and optionally, is then updated according to the existing protocol.

In some embodiments, the sixth RLC SN may be an RLC SN corresponding to the 1^{st} incompletely received data packet after the fifth RLC SN, and the data packet corresponding to the sixth RLC SN is not discarded. Based on this manner, when determining that data packets corresponding to one or more consecutive RLC SNs after the fifth RLC SN are completely received, or when the receive end has sent, to the transmit end, ACKs of data packets corresponding to one or more consecutive RLC SNs after the fifth RLC SN, the receive end may directly update the lower edge of the receiving window to the sixth RLC SN, so that the receive end does not need to update it again according to the existing protocol.

In some embodiments, the sixth RLC SN is greater than or equal to RX_Next, and less than or equal to RX_Next_Highest.

In some embodiments, the sixth RLC SN is greater than or equal to the fifth RLC SN, and is less than or equal to RX_Next_Highest.

In some embodiments, with reference to FIG. 10A, if updated RX_Next is greater than RX_Highest_Status, the receive end may further update RX_Highest_Status to the updated RX_Next. For example, if the receive end updates RX_Next to the sixth RLC SN, and the sixth RLC SN is greater than RX_Highest_Status, the receive end may further update RX_Highest_Status to the sixth RLC SN.

In some embodiments, with reference to FIG. 10B, if updated RX_Next is greater than or equal to RX_Next_Status_trigger, a reassembly timer is stopped. As shown in FIG. 4, RX_Next is less than RX_Next_Highest, and the receive end may further update RX_Next_Status_trigger to an RLC SN corresponding to RX_Next_Highest, and start (for example, the reassembly timer is not running or is stopped) or restart (for example, the reassembly timer is running) the reassembly timer. For example, if the receive end updates RX_Next to the sixth RLC SN, and the sixth RLC SN is greater than RX_Next_Status_Trigger, the receive end may further update RX_Next_Status_Trigger to an RLC SN corresponding to RX_Next_Highest, and start or restart the reassembly timer.

In some embodiments, when the fifth RLC SN is greater than or equal to RX_Highest_Status (or when RLC SNs corresponding to one or more data packets in discarded data packets are greater than or equal to RX_Highest_Status), the receive end may update RX_Highest_Status to a sixth RLC SN corresponding to a data packet after the fifth RLC SN. As described in the foregoing embodiment, the sixth RLC SN may be a next RLC SN of the fifth RLC SN, or the sixth RLC SN may be an RLC SN corresponding to the 1^{st} incompletely received data packet after the fifth RLC SN. For example, if the first N data packets in the discarded data packets are consecutive data packets, and an RLC SN corresponding to a last data packet in the first N data packets is greater than or equal to RX_Highest_Status, the receive end may update RX_Highest_Status to the RLC SN corresponding to the data packet after the last data packet in the first N data packets (for example, an RLC SN corresponding to a next data packet of the last data packet in the first N data packets, or an RLC SN with a smallest value among RLC SNs corresponding to data packets not completely received after the last data packet in the first N data packets).

In some embodiments, when the fifth RLC SN is greater than or equal to RX_Next_Status_Trigger (or when RLC SNs corresponding to one or more data packets in the discarded data packets are greater than or equal to RX_Next_Status_Trigger), and/or when the second RLC SN is less than or equal to RX_Highest_Status (or when an RLC SN corresponding to one or more data packets in the discarded data packets is greater than or equal to RX_Next_Status_Trigger), the receive end may update RX_Next_Status_Trigger to the RLC SN corresponding to RX_Next_Highest, and start or restart the reassembly timer. For example, if the first N data packets in the discarded data packets are consecutive data packets, and the RLC SN corresponding to the last data packet in the first N data packets is greater than or equal to RX_Next_Status_Trigger, the receive end may update RX_Next_Status_Trigger to an RLC SN corresponding to RX_Next_Highest, and start or restart the reassembly timer.

In some embodiments, when an RLC SN corresponding to any data packet in the discarded data packets is different from RX_Next, the receive end does not update RX_Next.

In some embodiments, when the receive end receives a complete data packet, and an RLC SN of the data packet is RX_Next, the receive end may update RX_Next to an SN number with a smallest value among RLC SNs corresponding to data packets that are not completely received.

In some embodiments, when RX_Next is updated to an RLC SN with a smallest value among RLC SNs corresponding to the discarded data packets, the receive end may update RX_Next to an RLC SN of a data packet after consecutive data packets in which the RLC SN with the smallest value is located in the discarded data packets.

In some embodiments, the receive end may update the status parameter of the receiving window by maintaining the receive end discard window. The status parameter of the receive end discard window may include a third discard status parameter (for example, RX_Discard_Low) and a fourth discard status parameter (for example, RX_Discard_High). The third discard status parameter is used to indicate a lower edge (an RLC SN with a smallest value among RLC SNs corresponding to discarded consecutive data packets) of discarded consecutive data packets (which may include consecutive data packets using a data packet with a smallest RLC SN among data packets that have been discarded and/or are to be discarded by the transmit end as a 1^{st} data packet). The fourth discard status parameter is used to indicate an upper edge of the discarded consecutive data packets (which, for example, is an RLC SN with a largest RLC SN among the discarded data packets, and further, is an RLC SN of a last data packet in consecutively discarded data packets using a data packet corresponding to the third discard status parameter as the 1^{st} data packet). Then, the receive end may update the status parameter of the PCDP layer based on a relationship between the status parameter of the receiving window and the third discard status parameter and the fourth discard status parameter and a relationship between the status parameter of the receiving window and RX_DELIV.

### Process of maintaining the receive end discard window

In some embodiments, the receive end discard window is used to indicate an SN of a data packet with a smallest value among RLC SNs corresponding to discarded data packets, or SNs of a plurality of consecutively discarded data packets in which a data packet with the smallest value among the RLC SNs corresponding to the discarded data packets is located. The plurality of consecutively discarded data packets means that RLC SNs of the plurality of data packets are consecutive. For example, assuming that RLC SNs corresponding to discarded data packets are SN2, SN5, SN8, and SN9, RX_Discard_High = RX_discard_low = SN2. For another example, assuming that RLC SNs corresponding to discarded data packets are SN2, SN3, SN4, SN8, and SN9, RX_Discard_High = SN4, RX_discard_low = SN2.

In some embodiments, if the receive end already determines that RX_Discard_High and RX_discard_low exist, and RLC SNs (one RLC SN or a plurality of consecutive RLC SNs) corresponding to data packets that are discarded by the transmit end and determined by the receive end are all less than the current RX_discard_low, the receive end may update RX_Discard_High to an upper edge of the RLC SNs corresponding to the data packets requested to be discarded, and update RX_discard_low to a lower edge of the RLC SNs corresponding to the data packets requested to be discarded.

In some embodiments, if the receive end already determines that RX_Discard_High and RX_discard_low exist, and RLC SNs (one RLC SN or a plurality of consecutive RLC SNs) corresponding to data packets that are discarded by the transmit end and determined by the receive end are all greater than the current RX_discard_high, the receive end may not update RX_Discard_High or RX_discard_low.

In some embodiments, if the receive end already determines that RX_Discard_High and RX_discard_low exist, and RLC SNs corresponding to data packets that are discarded by the transmit end and determined by the receive end overlap [RX_discard_low, RX_Discard_High] and may be superimposed into a consecutive RLC SN interval, the receive end may update RX_Discard_High to an upper edge (a maximum value of the consecutive RLC SN interval) of the consecutive RLC SN interval, and update RX_discard_low to a lower edge (a minimum value of the consecutive RLC SN interval) of the consecutive RLC SN interval.

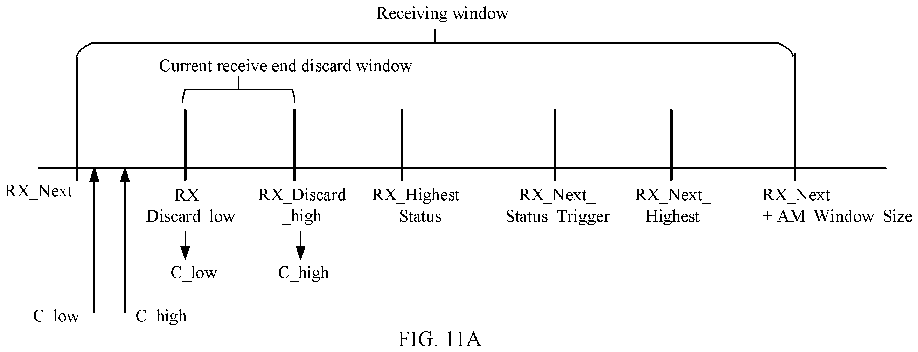

For example, FIG. 11A to FIG. 11E are schematic diagrams in which the receive end updates the receive end discard window according to some embodiments of this application.

It is assumed that the receive end already determines that RX_Discard_High and RX_discard_low (a determined receive end discard window corresponding to RX_Discard_High and TX_discard_low is referred to as a current receive end discard window) exist. An upper edge of RLC SNs of data packets that are discarded by the transmit end and determined by the receive end is SN_high, and a lower edge thereof is SN_low ≤ SN_high. The transmit end may update a status parameter of the receive end discard window based on a relationship between SN_high and SN_low and the current receive end discard window.

With reference to FIG. 11A, if SN_high is less than RX_discard_low, it indicates that all RLC SNs corresponding to the data packets requested to be discarded are less than RX_discard_low, the data packets requested to be discarded do not overlap the current discard window, and the receive end may update RX_discard_low to SN_low and update RX_discard_high to SN_high.

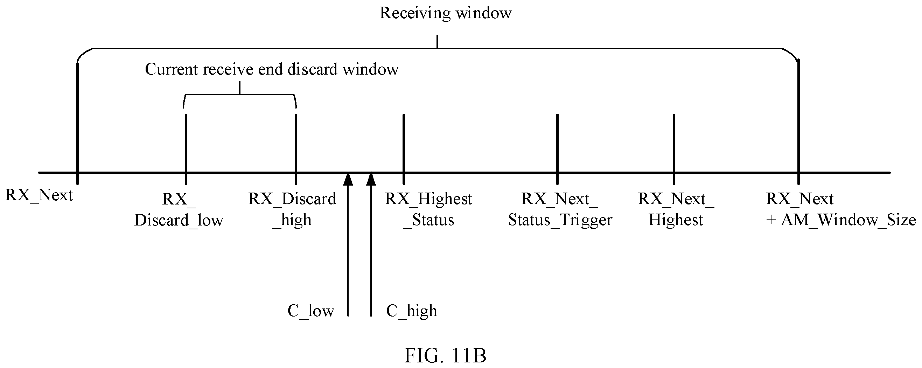

With reference to FIG. 11B, if SN_low is greater than RX_discard_high, it indicates that all RLC SNs corresponding to the data packets requested to be discarded are greater than RX_discard_high, and the receive end does not need to update the receive end discard window.

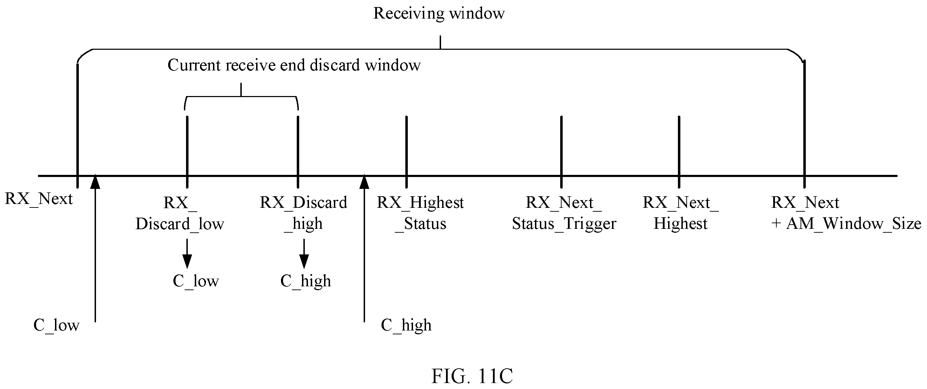

With reference to FIG. 11C, if SN_high is greater than or equal to RX_discard_high and SN_low is less than or equal to RX_discard_low, it indicates that the data packets requested to be discarded include the current receive end discard window, and the receive end may update RX_discard_low to SN_low and update RX_discard_high to SN_high.

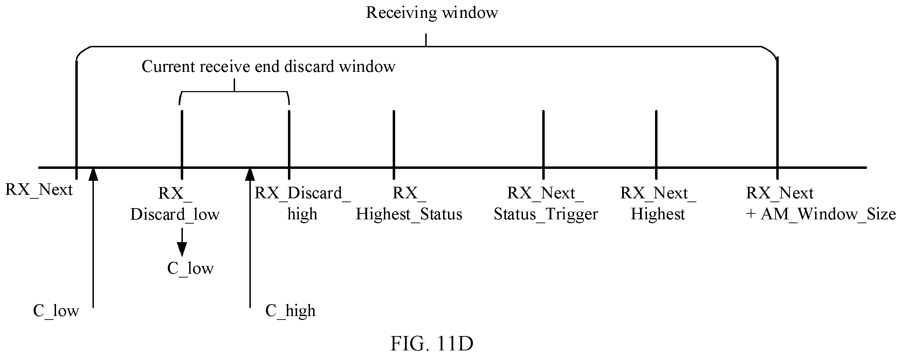

With reference to FIG. 11D, if SN_high is greater than or equal to RX_discard_low and less than or equal to RX_discard_high, and SN_low is less than RX_discard_low, it indicates that the data packet requested to be discarded and the current receive end discard window form new consecutive data packets, and the receive end may update RX_discard_low to SN_low.

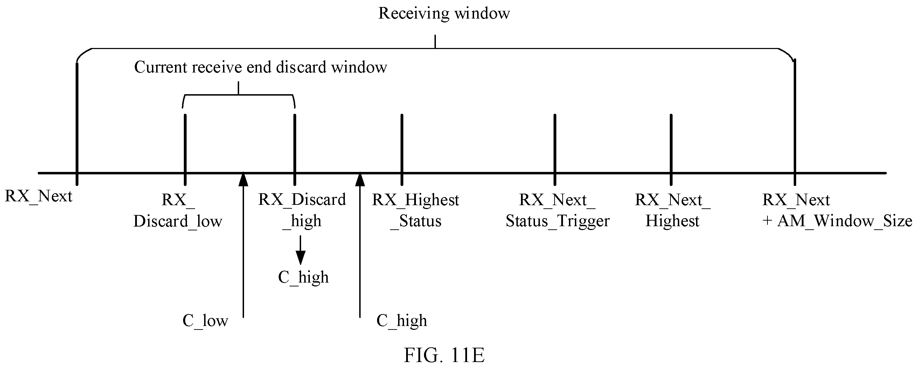

With reference to FIG. 11E, if SN_low is greater than RX_discard_low and less than or equal to RX_discard_high, and SN_high is greater than RX_discard_high, it indicates that the data packets requested to be discarded and the current receive end discard window form new consecutive data packets, and the receive end may update RX_discard_high to SN_high.

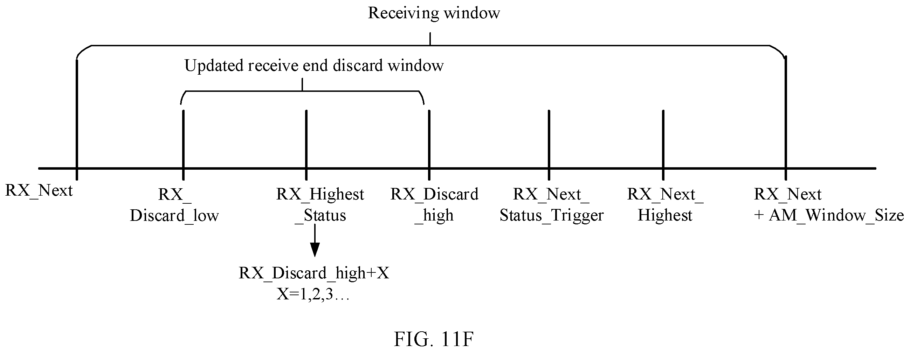

In some embodiments, with reference to FIG. 11F, the receive end discard window includes RX_Highest_Status, and optionally, the receive end discard window does not include RX_Next_Status_Trigger (which is equivalent to RX_discard_low ≤ RX_Highest_Status ≤ RX_discard_high). The receive end may update RX_Highest_Status to an RLC SN corresponding to a 1^{st} incompletely received data packet whose RLC SN is greater than RX_discard_high. For example, if a data packet corresponding to RX_discard_high + 1 is not completely received, the receive end may update RX_Highest_Status to RX_discard_high + 1; if the data packet corresponding to RX_discard_high + 1 is completely received, and a data packet corresponding to RX_discard_high + 2 is not completely received, the receive end may update RX_Highest_Status to RX_discard_high+2; and so on.

It should be understood that, in some other embodiments, the receive end may alternatively update RX_Highest_Status when updating the status parameter of the receiving window based on consecutively discarded data packets indicated by the receive end discard window. An occasion for updating RX_Highest_Status is not limited in embodiments of this application.

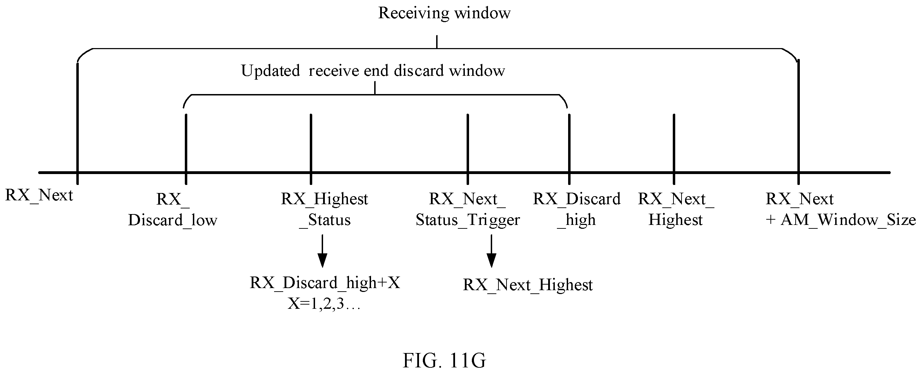

In some embodiments, with reference to FIG. 11G, if the updated receive end discard window includes RX_Highest_Status and RX_Next_Status_Trigger (which is equivalent to RX_discard_low ≤ RX_Highest_Status ≤ RX_Next_Status_Trigger ≤ RX_discard_high), the receive end may update RX_Highest_Status to an RLC SN corresponding to the 1^{st} incompletely received data packet whose RLC SN is greater than RX_discard_high, update RX_Next_Status_Trigger to RX_Next_highest, and start or restart a timer. For example, if the data packet corresponding to RX_discard_high + 1 is not completely received, the receive end may update RX_Highest_Status to RX_discard_high + 1, and update RX_Next_Status_Trigger to RX_Next_highest; if the data packet corresponding to the RX_discard_high + 1 is completely received, and the data packet corresponding to the RX_discard_high + 2 is not completely received, the receive end may update RX_Highest_Status to RX_discard_high + 2, and update RX_Next_Status_Trigger to RX_Next_highest; and so on.

It should be understood that, in some other embodiments, the receive end may alternatively update RX_Highest_Status and RX_Next_Status_trigger when updating the status parameter of the receiving window based on the receive end discard window. An occasion for updating RX_Highest_Status and RX_Next_Status_trigger is not limited in embodiments of this application.

The following is described.

### Process in which the receive end updates the status parameter of the receiving window based on the status parameter of the receive end discard window

When determining that the lower edge (RX_Next) of the receiving window is the same as a lower edge (RX_discard_low) of the receive end discard window, the receive end may update the lower edge of the receiving window to an RLC SN subsequent to an upper edge (RX_discard_high) of the receive end discard window, or an RLC SN of a 1^{st} incompletely received data packet after a data packet corresponding to the upper edge (RX_discard_high) of the receive end discard window.

In some embodiments, corresponding to the RLC layer, the data packet may be an RLC PDU and/or an RLC SDU.

In some embodiments, after the lower edge (RX_Next) of the receiving window is updated, if there are still discarded data packets in the current receiving window, the receive end may update or maintain RX_discard_low and RX_discard_high based on the discarded data packets in the receiving window. For a specific update manner, refer to the foregoing content of maintaining the receive end discard window. Details are not described herein again.

In some embodiments, if RX_discard_low ≤ RX_Highest_Status ≤ RX_discard_high, the receive end may update RX_Highest_Status to an RLC SN corresponding to a 1^{st} incompletely received data packet whose RLC SN is greater than RX_discard_high.

In some embodiments, if RX_discard_low ≤ RX_Next_Status_Trigger ≤ RX_discard_high, the receive end may update RX_Next_Status_Trigger to RX_Next_highest, and start or restart a timer.

In some embodiments, after the lower edge of the receiving window has been updated to the RLC SN subsequent to the upper edge of the receive end discard window (RX_discard_high), or if there is still a discarded data packet subsequent to the RLC SN of the 1^{st} incompletely received data packet after the upper edge (RX_discard_high) of the receive end discard window, the receive end may update or establish a receive end discard window based on embodiments shown in FIG. 11A to FIG. 11G, and update the status parameter of the transmitting window based on the updated or established a receive end discard window. It can be seen from the foregoing embodiments that the lower edge of the receiving window is not updated to an SN corresponding to the discarded data packet.

In some embodiments, after updating the status parameter of the receiving window, the receive end may further send a status report to the transmit end, where the status report indicates that all data packets corresponding to the discarded data packets have been received. For example, the status report may include ACKs of all data packets corresponding to the discarded data packets.

In some embodiments, a receiving status of a data packet corresponding to the discarded data packet in the status report is ACK, where the ACK indicates that the data packet has been completely received. In this way, the transmit end may update the status parameter of the transmitting window based on the existing protocol (for example, the TS28.322 protocol), for example, update the lower edge Tx_Next_Ack of the transmitting window to an RLC SN with a smallest value among RLC SNs corresponding to data packets with no ACK received.

### Process in which the receive end sends the status report to the transmit end

In some embodiments, the receive end may trigger, based on a relationship between the RLC SN corresponding to the discarded data packet and RX_Highest_Status and RX_Next_Status_Trigger, to send the status report to the transmit end.

In some embodiments, the RCL SN corresponding to the discarded data packet may correspond to the following case 5 to case 7 by using a relationship between the discard window and RX_Highest_Status and RX_Next_Status_Trigger as an example.

Case 5: RX_discard_low ≤ RX_Highest_Status ≤ RX_discard_high < RX_Next_Status_Trigger

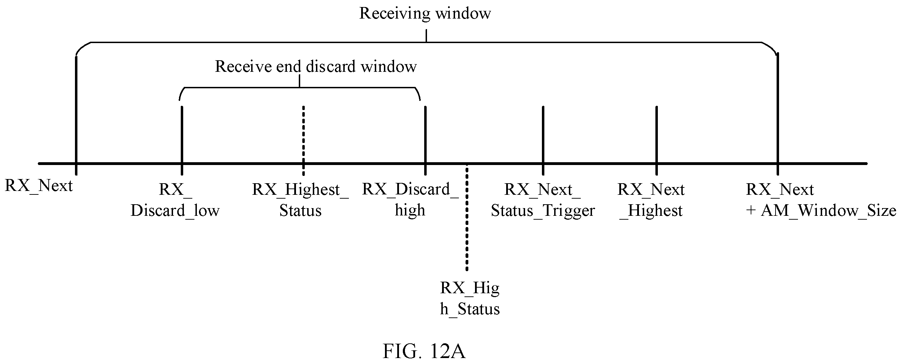

With reference to FIG. 12A, this case may be a case in which the receive end updates RX_Highest_Status in a process of maintaining the discard window (for example, the case shown in FIG. 11F), or a case of updating RX_Highest_Status in a process of updating the status parameter of the receiving window based on the receive end discard window.

Case 6: RX_discard_low ≤ RX_Highest_Status ≤ RX_Next_Status_Trigger ≤ RX_discard_high

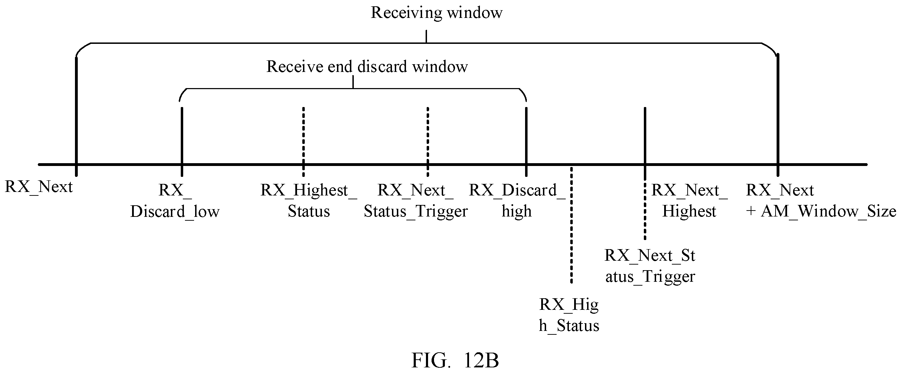

With reference to FIG. 12B, this case may be a case in which the receive end updates RX_Highest_Status and RX_Next_Status_Trigger in a process of maintaining the receive end discard window (for example, the case shown in FIG. 11G), or a case of updating RX_Highest_Status and RX_Next_Status_Trigger in a process of updating the status parameter of the receiving window based on the receive end discard window.

Case 7: RX_discard_low ≤ RX_discard_high < RX_Highest_Status

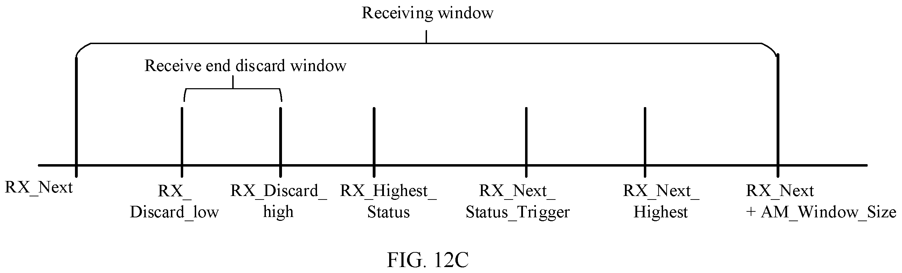

With reference to FIG. 12C, this case may be a case in which all RLC SNs corresponding to the receive end discard window are less than RX_Highest_Status, and the receive end does not update RX_Highest_Status or the RX_Next_Status_Trigger in a process of maintaining the receive end discard window and updating the status parameter of the receiving window based on the receive end discard window.

In some embodiments, corresponding to Case 5 and Case 6, because the receive end discard window is maintained, and the status parameter of the receiving window is updated based on the receive end discard window, to update RX_Highest_Status (or RX_Highest_Status and RX_Next_Status_Trigger), the receive end may trigger sending of the status report to the transmit end.

In some embodiments, corresponding to Case 7, the receive end may determine whether ACKs of all data packets indicated by the receive end discard window have been sent to the transmit end. If the receive end has sent, to the transmit end, ACKs of all the data packets indicated by the receive end discard window, it indicates that the transmit end no longer transmits or retransmits the data packets indicated by the receive end discard window, and the status report does not need to be triggered. If an ACK of at least one data packet in the data packets indicated by the receive end discard window has not been sent to the transmit end (for example, a receiving state corresponding to the at least one data packet is not sent, or a NACK receiving status corresponding to the at least one data packet is sent), indicating that the transmit end continues to transmit or retransmit the at least one data packet, and needs to trigger sending of the status report to the transmit end. In this way, if the receive end has sent, to the transmit end, the ACKs of all the data packets indicated by the receive end discard window, the status report does not need to be triggered based on the current receive end discard window, and frequency of and content for sending the status report by the receive end may be reduced.

In some embodiments, corresponding to any one of Case 5 to Case 7, when a transmission opportunity exists, the receive end may directly send the status report to the transmit end based on the existing transmission opportunity, without waiting for the t-StatusProhibit to expire before sending the status report. In this way, the receive end may send, to the transmit end in a timely manner, an ACK indicating a data packet corresponding to the receive end discard window, so that the transmit end may stop, in a timely manner, transmitting or retransmitting the data packet corresponding to the receive end discard window, thereby improving communication efficiency between the transmit end and the receive end.

In some embodiments, regardless of whether the receive end receives the data packet corresponding to the receive end discard window, in the status report sent by the receive end to the transmit end, a receiving status of the data packet corresponding to the receive end discard window is ACK, that is, even if the data packet corresponding to the receive end discard window is not received, the receiving status of the corresponding data packet is also set to ACK, instead of setting the receiving status of the data packet to NACK.

### Process in which the receive end updates the status parameter of the PDCP layer

In some embodiments, the receive end may update the status parameter of the PDCP layer of the receive end based on the discarded data packet (a data packet discarded and/or a data packet to be discarded by the transmit end), and further update the status parameters of the PDCP layer of the receive end based on the SN number of the discarded data packet.

For example, for the PDCP layer of the receive end, the status parameter may include RX_DELIV, RX_REORD, and the like.

In some embodiments, corresponding to the PDCP layer, the data packet may be a PDCP PDU and/or a PDCP SDU.

In some embodiments, discarded data packets may include a data packet C, or a plurality of consecutively discarded data packets using the data packet C as a 1^{st} data packet (data packets consecutive in terms of COUNT values), where the data packet C is a data packet with a smallest COUNT value among the discarded data packets.

When a COUNT value corresponding to the data packet C is equal to RX_DELIV, (optionally, the data packet C may be a data packet with the COUNT value corresponding to RX_DELIV; or when a COUNT value corresponding to one or more data packets in the discarded data packets is equal to RX_DELIV, or when COUNT values corresponding to one or more data packets in the discarded data packets include RX_DELIV), the receive end may update RX_DELIV to a third COUNT value after a second COUNT value corresponding to a last data packet in consecutively discarded data packets using the data packet C as a 1^{st} data packet. For example, if the discarded data packet includes only the data packet C, the second COUNT value is the same as the first COUNT value. If the discarded data packets include a plurality of consecutive data packets using the data packet C as the 1^{st} data packet, corresponding COUNT values are {First COUNT value, ..., Second COUNT value}.

In some embodiments, the third COUNT value may be a next COUNT value of the second COUNT value.

In some embodiments, the third COUNT value may be a COUNT value corresponding to a 1^{st} data packet that is not delivered to a higher layer by the PDCP layer and that is after the second COUNT value. For example, if COUNT values corresponding to consecutive data packets corresponding to the discarded data packets are C2, C3, and C4 (C2, C3, and C4 are consecutive COUNT values) and a data packet corresponding to the COUNT value C5 is not delivered to the higher layer, the receive end may update RX_DELIV to C5. For another example, if COUNT values corresponding to consecutive data packets corresponding to the discarded data packets are C2, C3, and C4, data packets corresponding to the COUNT values C5 and C6 have been delivered to the higher layer, and a data packet corresponding to the COUNT value C7 has not been delivered to the higher layer, the receive end may update RX_DELIV to C7.

In some embodiments, a data packet corresponding to the third COUNT value is not discarded, that is, the data packet corresponding to the third COUNT value is not in the discarded data packets. That is, if a data packet corresponding to a smallest COUNT value that is after a data packet corresponding to the second COUNT value and that is in COUNT values corresponding to data packets that have not been delivered to the higher layer is a data packet in the discarded data packets, the third COUNT value may be a COUNT value corresponding to a 1^{st} data packet (for example, with a smallest COUNT value) that is not in the discarded data packets and has not been delivered to the higher layer and that is after consecutive data packets including a smallest COUNT value (a data packet corresponding to the smallest COUNT value may be a 1^{st} data packet of the consecutive data packet, or may be a data packet in the middle of the consecutive data packets) in the discarded data packets.

For example, assuming that COUNT values of the discarded data packets are C1, C2, and C3, as well as C6, C7, and C8, data packets with the COUNT values of C4 and C5 have been delivered to the higher layer, and data packets with COUNT values of C6, C7, C8, and C9 are not delivered to the higher layer (or may be delivered to the higher layer), the receive end may update RX_DELIV to C9. In one case, the receive end may first update RX_DELIV to C4, and when determining that data packets whose COUNT values are C4 and C5 have been delivered to the higher layer and data packets corresponding to C6, C7, and C8 are discarded data packets, update RX_DELIV to C9. In another case, after RX_DELIV is updated to C1, the receive end may directly update RX_DELIV to C9 when determining that COUNT values of the discarded data packets are C1, C2, and C3, as well as C6, C7, and C8, and data packets whose COUNT values are C4 and C5 have been delivered to the higher layer.

In some embodiments, if a COUNT value corresponding to a last data packet of the consecutively discarded data packets is greater than or equal to RX_REORD (for example, a COUNT value corresponding to one or more data packets in the discarded data packets is greater than or equal to RX_REORD), the receive end may update RX_REORD to RX_NEXT, and start a reordering timer.

In some embodiments, if a COUNT value corresponding to a data packet existing in consecutive discarded data packets is greater than or equal to RX_REORD, the receive end may update RX_REORD to RX_NEXT, and start the reordering timer.

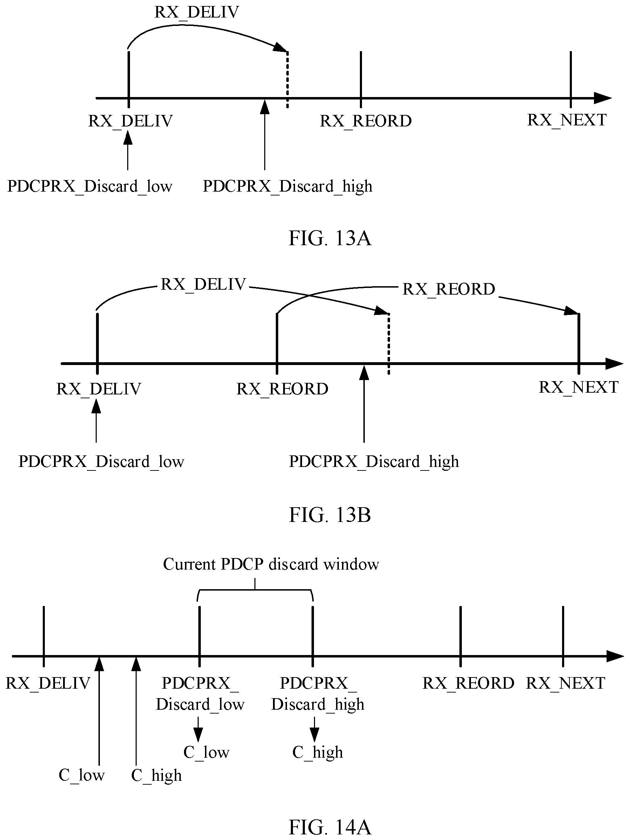

In some embodiments, with reference to FIG. 13A, if updated RX_DELIV is less than or equal to RX_REORD, the receive end may not update RX_REORD. It should be understood that, in some embodiments, the updated RX_DELIV is less than RX_NEXT.

In some embodiments, with reference to FIG. 13B, if the updated RX_DELIV is greater than RX_REORD, the reordering timer is stopped, where the updated RX_DELIV is less than RX_NEXT. The receive end may further update RX_REORD to RX_NEXT, where RX_DELIV is less than updated RX_REORD (that is, RX_NEXT), and start the reordering timer. For example, if the updated RX_DELIV is greater than RX_REORD, the receive end may start the reordering timer when the reordering timer is not running or stops running.

In some embodiments, the receive end may maintain a PDCP discard window at the PDCP layer to update the status parameter of the PDCP layer. A discard status parameter of the PDCP discard window may include a fifth discard status parameter (for example, PDCPRX_Discard_Low) and a sixth discard status parameter (for example, PDCPRX_Discard_High). The fifth discard status parameter is used to indicate a lower edge (for example, a COUNT value with a smallest value among COUNT values corresponding to consecutively discarded data packets) of the COUNT values corresponding to the consecutively discarded data packets, and the sixth discard status parameter is used to indicate an upper edge (for example, a COUNT value with a largest value among the COUNT values corresponding to the consecutively discarded data packets) of COUNT values of the discarded consecutive data packets. Then, the receive end may update the status parameter of the receiving window based on a relationship between the fifth and sixth discard status parameters and RX_DELIV.

### Maintenance of PDCP discard window

In some embodiments, the PDCP discard window is used to indicate a data packet with a smallest value among COUNT values corresponding to discarded data packets, or a plurality of consecutive discarded data packets in which a data packet with the smallest value among the COUNT values corresponding to the discarded data packets is located. For example, assuming that COUNT values corresponding to discarded data packets are C2, C5, C8, and C9, PDCPRX_Discard_High = PDCPRX_discard_low = C2. For another example, assuming that COUNT values corresponding to discarded data packets are C2, C3, C4, C8, and C9 (C2, C3, and C4 are consecutive COUNT values), PDCPRX_Discard_High = C4, and PDCPRX_discard_low = C2.

In some embodiments, if the receive end already determines that PDCPRX_Discard_High and PDCPRX_discard_low exist, and a COUNT value (one COUNT value or multiple consecutive COUNT values) corresponding to the data packet that the transmit end requests to discard is all less than a current PDCPRX_discard_low, the receive end may update PDCPRX_Discard_High to an upper edge of the COUNT value corresponding to the data packet requested to be discarded, and update PDCPRX_discard_low to a lower edge of the COUNT value corresponding to the data packet requested to be discarded.

In some embodiments, if the receive end already determines that PDCPRX_Discard_High and PDCPRX_discard_low exist, and a COUNT value (one COUNT value or multiple consecutive COUNT values) corresponding to a data packet that the transmit end requests to discard is greater than a current PDCPRX_discard_low, the receive end may not update PDCPRX_Discard_High or PDCPRX_discard_low.

In some embodiments, if the receive end already determines that PDCPRX_Discard_High and PDCPRX_discard_low exist, and a COUNT value corresponding to the data packet that the transmit end requests to discard overlaps with [ PDCPRX_discard_low, PDCPRX_Discard_High ] and may be superimposed into a consecutive COUNT value interval, the receive end may update PDCPRX_Discard_High to an upper edge (a maximum value of the consecutive COUNT value interval) of the consecutive COUNT value interval, and update PDCPRX_discard_low to a lower edge (a minimum value of the consecutive COUNT value interval) of the consecutive COUNT value interval.

For example, FIG. 14A to FIG. 14E are schematic diagrams in which a receive end updates a PDCP discard window according to some embodiments of this application.

Assuming that the receive end already determines that PDCPRX_Discard_High, PDCPRX_discard_low (the PDCP discard window corresponding to the determined PDCPRX_Discard_High, PDCPTX_discard_low is referred to as a current PDCP discard window below), an upper edge of a COUNT value corresponding to a data packet that is requested to be discarded at the PDCP layer is C_high and a lower edge is C_low, where C_low ≤ C_high. The receive end may update the status parameter of the PDCP discard window based on a relationship between C_high, C_low, and the current PDCP discard window.

With reference to FIG. 14A, if C_high is less than PDCPRX_discard_low, it indicates that all COUNT values corresponding to the data packets requested to be discarded are less than PDCPRX_discard_low, the data packet requested to be discarded does not overlap the current discard window, and the receive end may update PDCPRX_discard_low to C_low, and update PDCPRX_discard_high to C_high.

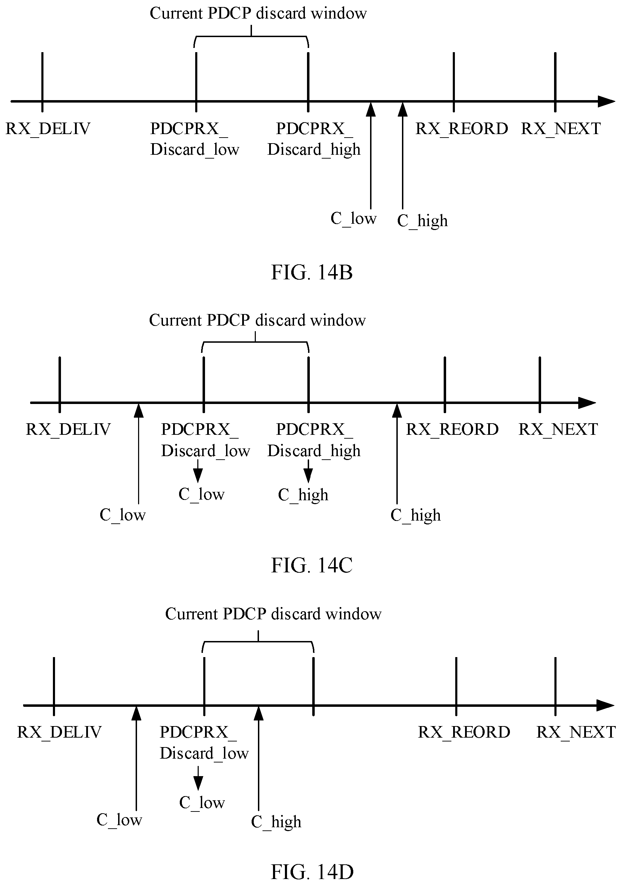

With reference to FIG. 14B, if C_low is greater than PDCPRX_discard_high, it indicates that all COUNT values corresponding to the data packets requested to be discarded are greater than PDCPRX_discard_high, and the receive end does not need to update the PDCP discard window.

With reference to FIG. 14C, if C_high is greater than or equal to PDCPRX_discard_high and C_low is less than or equal to PDCPRX_discard_low, it indicates that the data packet requested to be discarded includes the current PDCP discard window, and the receive end may update PDCPRX_discard_low to C_low and update PDCPRX_discard_high to C_high.

With reference to FIG. 14D, if C_high is greater than or equal to PDCPRX_discard_low and less than or equal to PDCPRX_discard_high, and C_low is less than PDCPRX_discard_low, it indicates that the data packet requested to be discarded and the current PDCP discard window form a new consecutive data packet, and the receive end may update PDCPRX_discard_low to C_low.

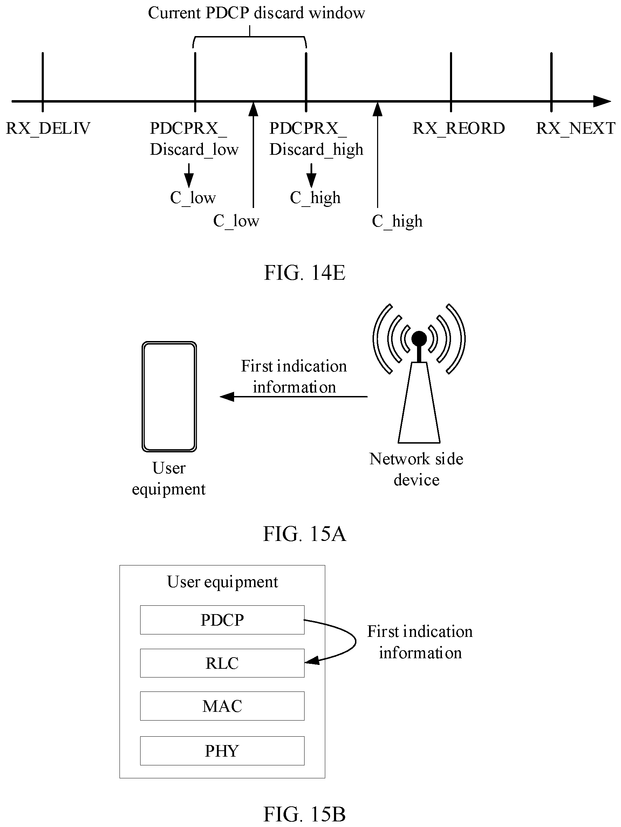

With reference to FIG. 14E, if C_low is greater than PDCPRX_discard_low and less than or equal to PDCPRX_discard_high, and C_high is greater than PDCPRX_discard_high, it indicates that the data packet requested to be discarded and the current PDCP discard window form a new consecutive data packet, and the receive end may update PDCPRX_discard_high to C_high.

In some embodiments, if updated PDCPRX_discard_high is greater than RX_REORD, the receive end may update RX_REORD to RX_NEXT.

The following is described.

### Process in which the receive end updates the status parameter of the PDCP layer based on the PDCP discard window

When determining a lower edge (PDCPRX_discard_low) of the PDCP discard window is the same as RX_DELIV of the PDCP layer, the receive end may update RX_DELIV to a COUNT value after PDCPRX_discard_high. For example, RX_DELIV is updated to a COUNT value subsequent to a COUNT value corresponding to PDCPRX_discard_high, or a COUNT value corresponding to a 1^{st} data packet that has not been delivered by the PDCP layer to the higher layer and that is after the COUNT value corresponding to PDCPRX_discard_high.

In some embodiments, after RX_DELIV is updated, if currently there is still a discarded data packet whose corresponding COUNT value is between RX_DELIV and RX_NEXT, the receive end may update or maintain PDCPRX_discard_low and PDCPRX_discard_high based on the discarded data packet. For a specific update manner, refer to the foregoing content of maintaining the PDCP discard window. Details are not described herein again.

In some embodiments, if updated RX_DELIV is less than or equal to RX_REORD, the receive end may not update RX_REORD.

For example, with reference to FIG. 13A, if PDCPRX_discard_high is less than RX_REORD, and updated RX_DELIV is less than or equal to RX_REORD, the receive end may not update RX_REORD.

In some embodiments, if the updated RX_DELIV is greater than RX_REORD, the receive end may further update RX_REORD to RX_NEXT, and start the reordering timer.

For example, with reference to FIG. 13B, if PDCPRX_discard_high is greater than or equal to RX_REORD, and the updated RX_DELIV is greater than RX_REORD, the receive end may further update RX_REORD to RX_NEXT, and start the reordering timer.

For another example, if PDCPRX_discard_high is less than RX_REORD, but the updated RX_DELIV is greater than RX_REORD, the receive end may also update RX_REORD to RX_NEXT, and start the reordering timer.

In some embodiments, when RX_DELIV is updated to a COUNT after PDCPRX_discard_high, if there is still a discarded data packet, the receive end may update or establish a PDCP discard window based on the embodiments shown in FIG. 14A to FIG. 14E, and update the status parameter of the PDCP layer based on the updated or established PDCP discard window. It can be seen from the foregoing embodiments that the lower edge of the receiving window is not updated to a COUNT value corresponding to the discarded data packet.

### Configuration process for a communication method

In some embodiments, the transmit end and the receive end may transfer, based on the foregoing control plane protocol framework, information for enabling or disabling a function corresponding to the communication method provided in embodiments of this application, for example, information for enabling or disabling a function of discarding a data packet that has been delivered to the lower layer, or a function of updating the transmission status parameter (for example, the status parameter of the transmitting window, the status parameter of the receiving window, or the status parameter of the PDCP layer) based on the discarded data packet.

For example, user equipment (UE) may obtain first indication information, where the first indication information is used to indicate whether to update the transmission status parameter based on the discarded data packet. When the first indication information instructs to update the transmission status parameter based on the discarded data packet, the user equipment discards the data packet that has been delivered to the lower layer. For example, an RLC layer of the user equipment may discard the data packet and update the transmission status parameter based on the method provided in the foregoing embodiments.

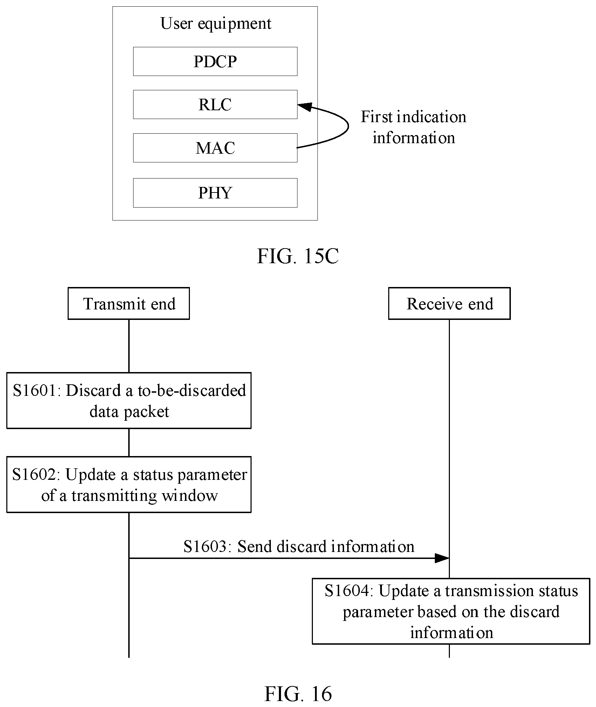

In some embodiments, with reference to FIG. 15A, a network side device (for example, a base station (base station, BS)) may configure the first indication information for the user equipment, where the first indication information may be configured when an RLC entity is configured. For example, the first indication information is included in a configuration parameter of the RLC entity. The first indication information may be configured by using a MAC CE, PDCP layer signaling, RLC layer signaling, or RRC signaling. Further, the first indication information may indicate which RLC entity can update the transmission status parameter based on the discarded data packet. For example, the first indication information includes an RLC entity identifier and indication information indicating whether to update the transmission status parameter based on the discarded data packet.

In some embodiments, the first indication information may be an implicit indication, content of which is obtained through other configuration information (for example, a PDU set-based discard indication, or an indication to discard a delivered data packet, or a PDU set importance-based discard indication).

In some embodiments, the network side device may further configure duration (for example, a timer) for applying the first indication information, or duration for discarding a data packet that has been delivered to the lower layer.

In some embodiments, with reference to FIG. 15B, in the user equipment or the network side device, the PDCP layer may indicate the first indication information to the RLC layer, and the PDCP layer indicates the first indication information when instructing to discard a data packet. A condition for the PDCP layer to indicate the first indication information to the RLC layer may include: A PDU set-based discard indication is configured at the PDCP layer, and/or a PDU set is discarded, and/or a PDU set importance-based discard indication is configured (for example, activated) at the PDCP layer. The PDU set-based discard indication is used to indicate that a PDU set is discarded (for example, when data packets in the PDU set are discarded, all data packets in the PDU set are discarded). The PDU set importance-based discard indication is used to instruct to use different discard timers based on different PDU set importance. For example, when a PDU set corresponding to a data packet is a PDU set of first importance, a first discard timer is started, and when a PDU set corresponding to a data packet is a PDU set of second importance, a second discard timer is started.

In some embodiments, with reference to FIG. 15B, in the user equipment or the network side device, the MAC layer may indicate the first indication information to the RLC layer. A condition for the MAC layer to indicate the first indication information to the RLC layer may include: A PDU set importance-based discard indication is configured (or activated) at the RLC entity.

The following describes technical solutions of this application with reference to the accompanying drawings.

As described above, in some embodiments, after determining to discard a to-be-discarded data packet, a transmit end may update a status parameter of a transmitting window, and send, to a receive end, discard information indicating the to-be-discarded data packet. Correspondingly, after receiving the discard information, the receive end may update a status parameter of a receiving window based on the discarded data packet indicated by the discard information.

For example, FIG. 16 is a schematic interaction flowchart of a communication method according to some embodiments of this application. As shown in FIG. 16, the interaction procedure includes the following steps.

S1601: A transmit end discards a to-be-discarded data packet.

For example, when determining that the to-be-discarded data packet meets the foregoing discard condition, the transmit end may discard the to-be-discarded data packet.

In some embodiments, corresponding to an RLC layer of the transmit end, the discard condition may include that a first RLC SN corresponding to a data packet A (used as the to-be-discarded data packet) meets: TX_Next_Ack ≤ First RLC SN ≤ TX_Next. The transmit end may discard the data packet A when the first RLC SN meets the TX_Next_Ack ≤ First RLC SN ≤ TX_Next; otherwise, no action is performed.

It should be understood that, in some other embodiments, the discard condition may include another condition, which is not limited herein.

In some embodiments, the transmit end may discard the to-be-discarded data packet when receiving the foregoing first indication information, and the first indication information instructs to discard the to-be-discarded data packet based on the discard.

S1602: The transmit end updates the status parameter of the transmitting window.

For example, after discarding the to-be-discarded data packet, the transmit end may update the status parameter of the transmitting window based on the discarded data packet. For a specific manner in which the transmit end updates the transmitting window, refer t**o content of the foregoing process in which the transmit end updates the status parameter, the foregoing process in which the transmit end maintains the discard window, and the foregoing process in which the transmit end updates the status parameter of the transmitting window based on the status parameter of the transmit end discard window**. Details are not described herein again.

In some embodiments, when the discarded data packet meets the foregoing update condition, the transmit end may update the status parameter of the transmitting window based on the discarded data packet.

In some embodiments, corresponding to the RLC layer of the transmit end, the update condition may include that the first RLC SN corresponding to the data packet A (used as the discarded data packet) meets: TX_Next_Ack ≤ First RLC SN ≤ TX_Next. The transmit end may update the status parameter (for example, TX_Next_Ack) of the transmitting window when the first RLC SN meets: TX_Next_Ack ≤ First RLC SN ≤ TX_Next; otherwise, no action is performed.

In some embodiments, when receiving the first indication information, and the first indication information instructs to update the status parameter of the transmitting window based on the discarded data packet, the transmit end may update the status parameter of the transmitting window.

S1603: The transmit end sends discard information to a receive end.

The transmit end may send, to the receive end, discard information of the data packet indicated to be discarded (for example, a data packet discarded and/or a data packet to be discarded by the transmit end).

In some embodiments, in some embodiments, the discard information may be used to indicate a data packet of a data packet discarded and/or a data packet to be discarded by the transmit end. For example, the discard information may include an identifier of an RLC SDU or an RLC PDU or a PDCP SDU or a PDCP PDU corresponding to a data packet discarded and/or a data packet to be discarded by the transmit end, for example, an RLC SN, a PDCP SN, or a COUNT value of a PDCP layer.

It should be understood that, in some other embodiments, the discard information may also be in another form, so that the receive end determines information about the discarded data packet, which is not limited herein.

S1604: The receive end updates a transmission status parameter based on the discard information.

After receiving the discard information, the receive end may update the transmission status parameter, for example, the status parameter of the receiving window or a status parameter of the PDCP layer, based on the discarded data packet indicated by the discard information.

In some embodiments, when the discarded data packet meets the foregoing update condition, the receive end may update the status parameter of the receiving window and the status parameter of the PDCP layer.

In some embodiments, corresponding to the RLC layer of the receive end, the update condition may include that a second RLC SN corresponding to a data packet B (a discarded data packet, such as a data packet discarded and/or a data packet to be discarded by the transmit end, where the data packet B may be an RLC SDU or an RLC PDU) meets: RX_Next ≤ Second RLC SN ≤ RX_Next_Highest.

In some embodiments, corresponding to the RLC layer of the receive end, the update condition may include that the second RLC SN corresponding to the data packet B meets: RX_Next ≤ second RLC SN ≤ RX_Highest_status.

In some embodiments, corresponding to the RLC layer of the receive end, the update condition may include that the second RLC SN corresponding to the data packet B meets: RX_Next ≤ Second RLC SN ≤ RX_Next_status_trigger.

In some embodiments, corresponding to updating of the status parameter of the PDCP layer, the update condition may include that a first COUNT value of a PDCP SDU corresponding to the data packet A (used as the to-be-discarded data packet) meets: RX_DELIV ≤ First COUNT value ≤ RX_NEXT.

In some embodiments, for a specific process in which the receive end updates the status parameter of the receiving window, refer to content of the foregoing process in which the receive end updates the status parameter, the foregoing process in which the receive end updates the status parameter of the RLC layer, the foregoing process in which the receive end maintains the discard window, and the foregoing process in which the receive end updates the status parameter of the receiving window based on the status parameter of the receive end discard window. Details are not described herein.

In some embodiments, for a specific process in which the receive end updates the status parameter of the PDCP layer, refer to content of the foregoing process in which the receive end updates the status parameter, the foregoing process in which the receive end updates the status parameter of the PDCP layer, maintenance of maintains the PDCP discard window, and the foregoing process in which the receive end updates the status parameter of the PDCP layer based on the PDCP discard window. Details are not described herein.

In some embodiments, when the receive end receives the first indication information, and the first indication information instructs to update the status parameter of the receiving window based on the discarded data packet, the receive end may update the status parameter of the receiving window.

In some embodiments, when receiving the first indication information, and the first indication information instructs to update the status parameter of the PDCP layer based on the discarded data packet, the receive end may update the status parameter of the PDCP layer.

In some embodiments, for a specific form of the first indication information, a manner in which the receive end receives the first indication information, and the like, refer to content in the configuration part of the foregoing communication method. Details are not described herein again.

It should be understood that an execution sequence of step S1601 to step S1604 is merely an example. In some other embodiments, an execution sequence of some steps may be adjusted, or some steps may be combined or split, which is not limited herein. For example, in some embodiments, step S1602 and step S1603 may be performed synchronously, or an execution sequence may be adjusted. For another example, step S1604 may be performed before step S1603, or may be performed in parallel with step S1604, which is not limited herein. For another example, step S1601 and step S1603 may be combined for execution, and step S1602 and step S1604 may be performed in parallel.

In some embodiments, step S1601 to step S1604 may be implemented by RLC layers of the transmit end and the receive end.

Based on the foregoing method, the transmit end and the receive end may adjust the status parameter of the transmitting window and the status parameter of the receiving window in a timely manner when the discarded data packet has been delivered to a lower layer, so as to avoid retransmission of the discarded data packet and prevent the receiving window from being deadlocked. This helps improve quality of communication between the transmit end and the receive end.

In some embodiments, after determining to discard the to-be-discarded data packet, the transmit end may send, to the receive end, the discard information indicating the discarded data packet. After receiving the discard information, the receive end may update the status parameter of the receiving window based on the discarded data packet indicated by the discard information, and send, to the transmit end, an ACK indicating that all the discarded data packets have been completely received. Correspondingly, after receiving the ACK indicating that all the discarded data packets have been completely received, the transmit end may update the status parameter of the transmitting window based on an existing protocol framework.

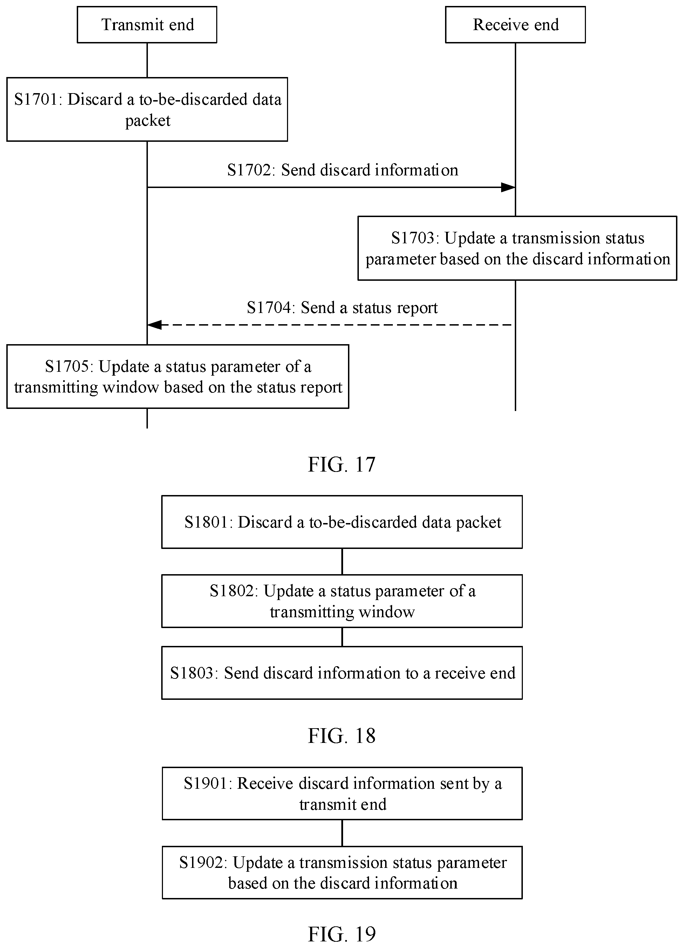

For example, FIG. 17 is a schematic interaction flowchart of a communication method according to some embodiments of this application. As shown in FIG. 17, the interaction procedure includes the following steps.

S1701: A transmit end discards a to-be-discarded data packet.

For details, refer to the foregoing step S1601, and details are not described herein again.

S1702: The transmit end sends discard information to a receive end.

After discarding the to-be-discarded data packet, the transmit end may send, to the receive end, discard information indicating a discarded data packet (for example, a data packet discarded and/or a data packet to be discarded by the transmit end).

In some embodiments, the discard information may be used to indicate a discarded data packet. For example, the discard information may include an identifier of an RLC SDU or an RLC PDU or a PDCP SDU or a PDCP PDU corresponding to a data packet discarded and/or a data packet to be discarded by the transmit end, for example, an RLC SN, a PDCP SN, or a COUNT value of a PDCP layer.

It should be understood that, in some other embodiments, the discard information may also be information in another form, which is not limited herein.

S1703: The receive end updates a transmission status parameter based on the discard information.

After receiving the discard information, the receive end may update the transmission status parameter (for example, a status parameter of a receiving window or a status parameter of the PDCP layer) based on the discard information (for example, a discarded data packet indicated by the discard information). For details, refer to content of step S1604. Details are not described herein again.

S1704: The receive end sends a status report to the transmit end.

The receive end may further send the status report to the transmit end, where the status report indicates that all data packets corresponding to the discarded data packet have been received. When the transmission status parameter is updated based on the discard information, the receive end may trigger the status report. For a process and a manner in which the receive end triggers the status report, refer to content in the foregoing process part in which the receive end sends the status report to the transmit end. Details are not described herein again.

In some embodiments, if ACKs corresponding to all data packets corresponding to the discarded data packet have been sent to the transmit end, the receive end may not send the status report. In some embodiments, if ACKs of a part of data packets in data packets corresponding to the discarded data packet have been sent to the transmit end, the status report may not include the ACKs of the part of data packets.

In some embodiments, if NACKs of a part of data packets in data packets corresponding to the discarded data packet have been sent to the transmit end, the status report may change receiving statuses of the part of data packets to ACK.

S1705: The transmit end updates a status parameter of the transmitting window based on the status report.

After receiving the status report, the transmit end may update the status parameter of the transmitting window based on a related protocol (for example, the TS28.322 protocol). For details, refer to descriptions of the related protocol. Details are not described herein again.

In some embodiments, step S1704 and step S1705 may be interchanged in terms of order, or may be performed in parallel, which is not limited herein.

An embodiment of this application further provides a communication method, and applied to a transmit end. With reference to FIG. 18, the method includes the following steps.

S1801: Discard a to-be-discarded data packet.

For example, after receiving a discard request from an upper layer (for example, a PDCP layer), the transmit end (for example, an RLC layer of the transmit end) may discard the to-be-discarded data packet. For details, refer to content of the foregoing step S1601, and details are not described herein again.

S1802: Update a status parameter of a transmitting window.

For example, after discarding the to-be-discarded data packet, the transmit end (for example, the RLC layer of the transmit end) may update the status parameter of the transmitting window based on the discarded data packet. For details, refer to content of the foregoing step S1602, and details are not described herein again.

S1803: Send discard information to a receive end.

The transmit end sends the discard information to the receive end, where the discard information is used to indicate a discarded data packet (for example, a data packet discarded and/or a data packet to be discarded by the transmit end) and instruct the receive end to update the transmission status parameter based on the discard information.

In some embodiments, the discard information may be used to indicate a discarded data packet. For example, the discard information may include an identifier of an RLC SDU or an RLC PDU or a PDCP SDU or a PDCP PDU corresponding to a data packet discarded and/or a data packet to be discarded by the transmit end, for example, an RLC SN, a PDCP SN, or a COUNT value of a PDCP layer.

It should be understood that the discard information may be any information that can indicate a discarded data packet, and a specific form of the discard information is not limited in embodiments of this application.

In some embodiments, the discard information may be used to instruct the RLC layer of the receive end to update a status parameter of a receiving window, and/or instruct the PDCP layer of the receive end to update a status parameter of the PDCP layer.

Based on the foregoing embodiment, the transmit end may update the status parameter of the transmitting window in a timely manner based on the discarded data packet, so as to prevent the transmit end from transmitting or retransmitting the discarded data packet. In addition, the transmit end may instruct, by using the discard information, the receive end to update the status parameter of the receiving window and/or the status parameter of the PDCP layer in a timely manner, so as to avoid a deadlock of the receiving window or a data receiving failure at the PDCP layer caused due to the parameter not being updated in a timely manner, thereby improving communication quality.

An embodiment of this application further provides a communication method, and applied to a receive end. With reference to FIG. 19, the method includes the following steps.

S1901: Receive discard information sent by a transmit end.

For example, the receive end may receive the discard information sent by the transmit end (for example, an RLC layer, a PDCP layer, a MAC layer, or a PHY layer of the transmit end).

In some embodiments, the discard information may be used to indicate a discarded data packet (for example, a data packet discarded and/or a data packet to be discarded by the transmit end). For example, the discard information may include an identifier of an RLC SDU or an RLC PDU or a PDCP SDU or a PDCP PDU corresponding to a data packet discarded and/or a data packet to be discarded by the transmit end, for example, an RLC SN, a PDCP SN, or a COUNT value of a PDCP layer.

It should be understood that the discard information may be any information that can indicate a discarded data packet, and a specific form of the discard information is not limited in embodiments of this application.

S1902: Update a transmission status parameter based on the discard information.

After receiving the discard information, the receive end may determine the discarded data packet indicated by the discard information, and update the transmission status parameter based on the discarded data packet.

For example, the receive end may determine an RLC SDU or an RLC PDU corresponding to the discarded data packet indicated by the discard information, and update the status parameter of the receiving window based on the RLC SDU or the RLC PDU corresponding to the discarded data packet. For details, refer to the foregoing process in which the receive end updates the status parameter, the foregoing process in which the receive end updates the status parameter of the RLC layer, the foregoing process in which the receive end maintains the discard window, and the foregoing process in which the receive end updates the status parameter of the receiving window based on the status parameter of the receive end discard window. Details are not described herein.

For example, the receive end may determine a PDCP SDU or a PDCP PDU corresponding to the discarded data packet indicated by the discard information, and update a status parameter of the PDCP layer based on the PDCP SDU or the PDCP PDU corresponding to the discarded data packet. For details, refer to content of the foregoing process in which the receive end updates the status parameter, the foregoing process in which the receive end updates the status parameter of the PDCP layer, maintenance of the PDCP discard window, and the foregoing process in which the receive end updates the status parameter of the PDCP layer based on the PDCP discard window. Details are not described herein.

Based on the foregoing embodiment, the receive end may update the status parameter of the receiving window and/or the status parameter of the PDCP layer in a timely manner based on the discarded data packet, so as to avoid a deadlock of the receiving window or a data receiving failure at the PDCP layer caused due to the parameter not being updated in a timely manner, thereby improving communication quality.

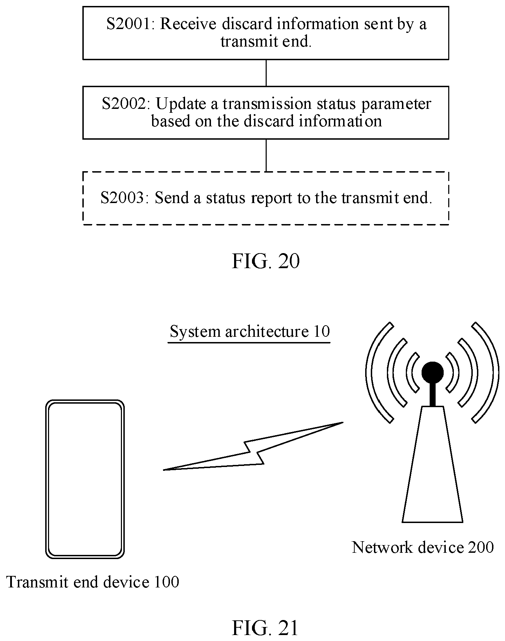

An embodiment of this application further provides a communication method, and applied to a receive end. With reference to FIG. 20, the method includes the following steps.

S2001: Receive discard information sent by a transmit end.

For example, the receive end may receive the discard information sent by the transmit end (for example, an RLC layer, a PDCP layer, a MAC layer, or a PHY layer of the transmit end).

In some embodiments, the discard information may be used to indicate a discarded data packet (for example, a data packet discarded and/or a data packet to be discarded by the transmit end). For example, the discard information may include an identifier of an RLC SDU or an RLC PDU or a PDCP SDU or a PDCP PDU corresponding to a data packet discarded and/or a data packet to be discarded by the transmit end, for example, an RLC SN, a PDCP SN, or a COUNT value of a PDCP layer.

It should be understood that the discard information may be any information that can indicate a discarded data packet, and a specific form of the discard information is not limited in embodiments of this application.

S2002: Update a transmission status parameter based on the discard information.

After receiving the discard information, the receive end may determine the discarded data packet indicated by the discard information, and update the transmission status parameter based on the discarded data packet.

For example, the receive end may determine an RLC SDU or an RLC PDU corresponding to the discarded data packet indicated by the discard information, and update the status parameter of the receiving window based on the RLC SDU or the RLC PDU corresponding to the discarded data packet. For details, refer to content of the foregoing process in which the receive end updates the status parameter, the foregoing process in which the receive end updates the status parameter of the RLC layer, the foregoing process in which the receive end maintains the discard window, and the foregoing process in which the receive end updates the status parameter of the receiving window based on the status parameter of the receive end discard window. Details are not described herein.

For example, the receive end may determine a PDCP SDU or a PDCP PDU corresponding to the discarded data packet indicated by the discard information, and update a status parameter of the PDCP layer based on the PDCP SDU or the PDCP PDU corresponding to the discarded data packet. For details, refer to content of the foregoing process in which the receive end updates the status parameter, the foregoing process in which the receive end updates the status parameter of the PDCP layer, maintenance of the PDCP discard window, and the foregoing process in which the receive end updates the status parameter of the PDCP layer based on the PDCP discard window. Details are not described herein.

S2003: Send a status report to the transmit end.

For example, after updating the status parameter of the receiving window, the receive end may send the status report to the transmit end, where the status report is used to indicate that the discarded data packet indicated by the discard information has been received by the receive end.

For a process and a manner in which the receive end triggers the status report, refer to content of the foregoing process in which the receive end sends the status report to the transmit end. Details are not described herein again.

In some embodiments, if ACKs corresponding to all data packets corresponding to the discarded data packet have been sent to the transmit end, the receive end may not send the status report. In some embodiments, if ACKs of a part of data packets in data packets corresponding to the discarded data packet have been sent to the transmit end, the status report may not include the ACKs of the part of data packets.

In some embodiments, if NACKs of a part of data packets in data packets corresponding to the discarded data packet have been sent to the transmit end, the status report may change receiving statuses of the part of data packets to ACK.

It should be understood that, after receiving the status report, the transmit end may update a status parameter of the transmit end based on the status report, for example, update a status parameter of a transmitting window. Because all discarded data packets indicated by the discard information have been acknowledged by the receive end (which may actually be that the receive end has not received a data packet and merely sends an ACK), the transmit end does not retransmit this data packet, which helps improve communication quality.

The communication method provided in embodiments of this application may be applied to a scenario such as transmission of audio stream data, video stream data, or picture data between a transmit end and a receive end under a service such as audio, video, and picture, for example, an XR scenario. The data packet discarding method provided in embodiments of this application may be applied to various types of communication systems, for example, a 5th generation (5th Generation, 5G) mobile communication system such as a new radio (new radio, NR) system. Furthermore, the method may also be applied to a universal mobile telecommunications system (universal mobile telecommunications system, UMTS), a wireless local area network (wireless local area network, WLAN), a wireless fidelity (wireless fidelity, Wi-Fi) system, a wired system, a vehicle to everything (vehicle to everything, V2X) communication system, a device-to-device (device-to-device, D2D) communication system, a 4^{t}h generation (4^{th} generation, 4G) mobile communication system, a satellite communication system, and a future communication system, such as a 6th generation (6th Generation, 6G) mobile communication system. This is not limited in embodiments of this application.

For example, FIG. 21 is a schematic structural diagram of a system architecture 10 to which a communication method is applicable according to an embodiment of this application. The system architecture includes a transmit end device 100 and a receive end device 200 (or referred to as a transmit end and a receive end).

In some embodiments, the transmit end device 100 may act as a transmit end of data packet transmission, and the receive end device 200 may act as a receive end of the data packet transmission.

In some embodiments, the transmit end device 100 may be a plurality of types of user equipment, such as a mobile phone, a tablet computer, a wearable device, a vehicle-mounted device, an augmented reality (augmented reality, AR)/virtual reality (virtual reality, VR) device, a cloud gaming (cloud gaming, CG) device, a mixed reality (mixed reality, MR) device, a notebook computer, an ultra-mobile personal computer (ultra-mobile personal computer, UMPC), a netbook, a personal digital assistant (personal digital assistant, PDA) and other devices with audio/video and communication functions. A specific type of the transmit end device is not limited in embodiments of this application.

In some embodiments, the receive end device 200 may be a network device/core network device, for example, an access device through which the transmit end device 100 wirelessly accesses a wireless communication system. The receive end device 200 may be an entity on a network side, configured to transmit or receive a signal, for example, a base station. The base station may broadly cover or be replaced with the following names, for example: NodeB (NodeB), evolved NodeB (evolved NodeB, eNB), next generation NodeB (next generation NodeB, gNB), relay station, access point, transmitting and receiving point (transmitting and receiving point, TRP), transmitting point (transmitting point, TP), master station, secondary station, multi-standard radio node, home base station, network controller, access node, access point, transmission node, transceiver node, baseband unit, a remote radio unit, an active antenna unit, a radio head, a central unit, a distributed unit, a positioning node, and the like. The base station may be a macro base station, a micro base station, a relay node, a donor node, or the like. The base station may alternatively be used as a communication module, modem, or chip disposed in the foregoing device or apparatus. The base station may alternatively be a mobile switching center, a device that performs a function of a base station in device-to-device, vehicle-to-everything, or machine-to-machine communication, or the like. A specific technology and a specific device form that are used by the network device are not limited in embodiments of this application.

In some embodiments, the transmit end device 100 may be a network device/core device, and correspondingly, the receive end device 200 may be user equipment.

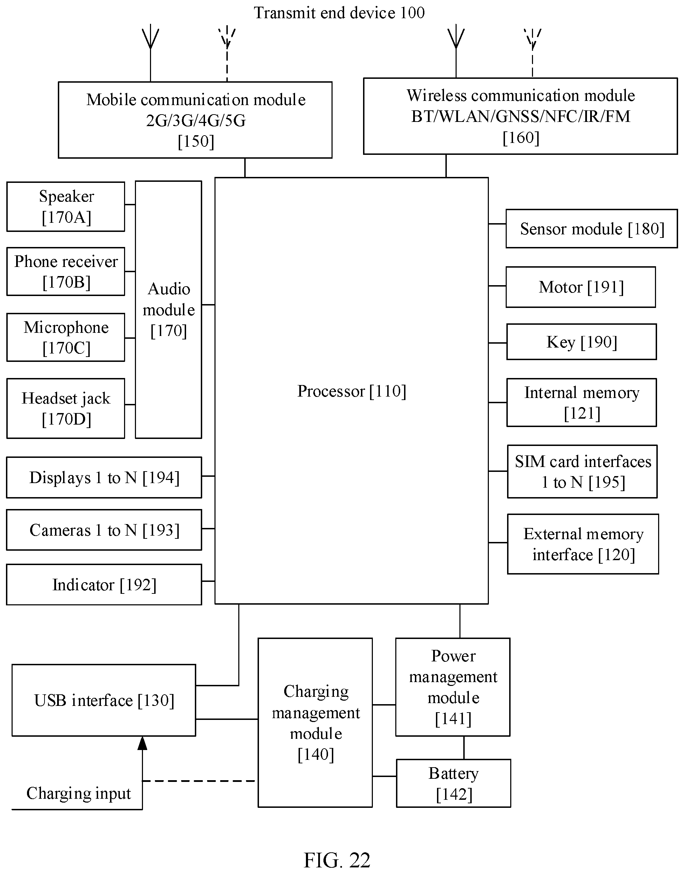

For example, FIG. 22 is a schematic structural diagram of a transmit end device 100 according to an embodiment of this application.

The transmit end device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display 194, a subscriber identity module (subscriber identification module, SIM) card interface 195, and the like.

It may be understood that an example structure in this embodiment of this application does not constitute a specific limitation on the transmit end device 100. In some other embodiments of this application, the transmit end device 100 may include more or fewer components than those shown in the figure, or some components may be combined, or some components may be divided, or different component arrangements may be used. The components shown in the figure may be implemented by hardware, software, or a combination of software and hardware. In addition, an interface connection relationship between the modules illustrated in this embodiment of this application is merely an example for description, and does not constitute a limitation on a structure of the transmit end device 100. In some other embodiments of this application, the transmit end device 100 may alternatively use an interface connection manner different from that in the foregoing embodiment, or use a combination of a plurality of interface connection manners.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the transmit end device 100. The controller may generate an operation control signal based on instruction operation code and a time sequence signal, to complete control of instruction fetch and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The charging management module 140 is configured to receive a charging input from the charger. The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (current leakage or impedance). In some other embodiments, the power management module 141 may alternatively be disposed in the processor 110. In some other embodiments, the power management module 141 and the charging management module 140 may alternatively be disposed in a same device.

A wireless communication function of the transmit end device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the transmit end device 100 may be configured to cover a single communication frequency band or a plurality of communication frequency bands. Different antennas may be further multiplexed, to increase antenna utilization. For example, the antenna 1 may be multiplexed as a diversity antenna in a wireless local area network. In some other embodiments, the antennas may be used in combination with a tuning switch.

The mobile communication module 150 may provide solutions for wireless communication including 2G/3G/4G/5G applied to the transmit end device 100.

The wireless communication module 160 may provide solutions for wireless communication applied to the transmit end device 100, including a wireless local area network (wireless local area network, WLAN) (such as a wireless fidelity (wireless fidelity, Wi-Fi) network), bluetooth (bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the transmit end device 100, the antenna 1 is coupled to the mobile communication module 150, and the antenna 2 is coupled to the wireless communication module 160, so that the transmit end device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division-synchronous multiple access, TD-SCDMA), long term evolution (long term evolution, LTE), BT, a GNSS, a WLAN, NFC, FM, IR, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The transmit end device 100 implements a display function by using the GPU, the display 194, the application processor, and the like. The display 194 is configured to display an image, a video, and the like.

The external memory interface 120 may be configured to connect to an external storage card such as a micro SD card, to extend a storage capability of the transmit end device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage region and a data storage region. The program storage area may store an operating system, an application for at least one function (for example, a sound play function or an image play function), and the like. The data storage area may store data (such as audio data or an address book) created during use of the transmit end device 100. In addition, the internal memory 121 may include a high speed random access memory, and may further include a nonvolatile memory, such as at least one magnetic disk storage device, a flash memory, or a universal flash storage (universal flash storage, UFS). The processor 110 executes various functional applications and data processing of the transmit end device 100 by running instructions stored in the internal memory 121 and/or instructions stored in the memory disposed in the processor.

The transmit end device 100 may implement an audio function, for example, music playing or recording, by using the audio module 170, the speaker 170A, the receiver 170B, the microphone 170C, the headset jack 170D, the application processor, and the like.

In some embodiments, the receive end device 200 may use a structure similar to or the same as that of the transmit end device 100, or may use a different structure. This is not limited herein.

Based on the same technical concept, an embodiment of this application further provides a transmit end device, including: one or more processors; and one or more memories. The one or more memories store one or more computer programs, the one or more computer programs include instructions, and when the instructions are executed by the one or more processors, the transmit end device is enabled to perform one or more steps in any one of the foregoing methods.

Based on the same technical concept, an embodiment of this application further provides a communication system including a transmit end device and a receive end device, where the transmit end device is configured to perform one or more steps in any one of the foregoing methods, and the receive end is configured to receive the data packet in the protocol data unit set transmitted by the transmit end.

Based on the same technical concept, an embodiment of this application further provides a computer-readable storage medium, the computer-readable storage medium stores computer-executable program instructions, and when the computer-executable program instructions are on a computer, the computer or a processor is enabled to implement one or more steps in any one of the foregoing methods.

Based on the same technical concept, an embodiment of this application further provides a computer program product including instructions, the computer program product includes computer program code, and when the computer program code is run on a computer, the computer or a processor is enabled to implement one or more steps in any one of the foregoing methods.

It should be noted that, in embodiments of this application the description about a numerical interval, for example, "A is between B and C" may include endpoints (for example, B and C) or may not include endpoints. That is, "A is between B and C" may be B < A < C, or may be B ≤ A < C, or may be B ≤ A ≤ C, or B < A ≤ C.

In the foregoing embodiments, all or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from one website, computer, server, or data center to another website, computer, server, or data center in a wired (for example, by using a coaxial cable, an optical fiber, or a digital subscriber line) or wireless (for example, infrared, radio, or microwave) mode. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in embodiments may be implemented by a computer program instructing relevant hardware. The program may be stored in a computer-readable storage medium. When the program is executed, the procedures in the method embodiments may be performed. The foregoing storage medium includes any medium that can store program code, such as a ROM, a random access memory RAM, a magnetic disk, or an optical disc.

The foregoing descriptions are merely specific implementations of the embodiments of this application, but the protection scope of the embodiments of this application is not limited thereto. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A communication method, applied to a transmit end, wherein the method comprises:
determining a discarded data packet; and
updating a transmission status parameter of the transmit end based on the discarded data packet.

2. The method according to claim 1, wherein the transmission status parameter of the transmit end comprises a first status parameter, and the first status parameter is used to indicate a sequence number of a next to-be-acknowledged received data packet of the transmit end.

3. The method according to claim 2, wherein the discarded data packet meets a first condition; and
the first condition comprises:
the discarded data packet is in the transmitting window; or
a sequence number of the discarded data packet is between the sequence number indicated by the first status parameter and a sequence number of a next data packet sent by the transmit end; or
a sequence number of the discarded data packet is greater than or equal to the sequence number indicated by the first status parameter; or
a sequence number of the discarded data packet is less than or equal to a sequence number of a next data packet sent by the transmit end.

4. The method according to claim 2 or 3, wherein the updating the transmission status parameter of the transmit end based on the discarded data packet comprises:
when the discarded data packet meets a second condition, updating the transmission status parameter of the transmit end based on the discarded data packet; and
the second condition comprises:
the discarded data packet is in the transmitting window; or
the sequence number of the discarded data packet is between the sequence number indicated by the first status parameter and the sequence number of the next data packet sent by the transmit end; or
the sequence number of the discarded data packet is greater than or equal to the sequence number indicated by the first status parameter; or
the sequence number of the discarded data packet is less than or equal to the sequence number of the next data packet sent by the transmit end.

5. The method according to claim 2, wherein the updating the transmission status parameter of the transmit end based on the discarded data packet comprises:
when a first data packet with a sequence number the same as the sequence number indicated by the first status parameter exists in the discarded data packet, updating the first status parameter to a second sequence number after a first sequence number of the first data packet; or
corresponding to that no data packet with a sequence number the same as the sequence number indicated by the first status parameter exists in the discarded data packet, when the first status parameter is updated to the first sequence number, updating the first status parameter to the second sequence number.

6. The method according to claim 3 or 4, wherein the updating the transmission status parameter of the transmit end based on the discarded data packet comprises:
when the sequence number indicated by the first status parameter is the same as a first sequence number of a first data packet in the discarded data packet, updating the first status parameter to a second sequence number after the first sequence number, wherein the first data packet is a data packet with a smallest sequence number in the discarded data packet; or
corresponding to that the sequence number indicated by the first status parameter is different from the first sequence number, when the first status parameter is updated to the first sequence number, updating the first status parameter to the second sequence number.

7. The method according to claim 5 or 6, wherein the discarded data packet comprises a first consecutive data packet, the first consecutive data packet comprises the first data packet, and the second sequence number is a sequence number of a second data packet after the first consecutive data packet.

8. The method according to claim 7, wherein the second data packet is a next data packet of the first consecutive data packet, or a 1^{st} data packet that is after the first consecutive data packet and that has no acknowledgment feedback received, or a 1^{st} data packet that is after the first consecutive data packet and is not in the discarded data packet and that has no acknowledgment feedback received.

9. The method according to claim 7, wherein the first sequence number and a third sequence number corresponding to a last data packet in the first consecutive data packet are maintained based on a first discard status parameter and a second discard status parameter respectively.

10. The method according to claim 9, wherein the method further comprises:
determining at least one discarded consecutive data packet, and updating the first discard status parameter and the second discard status parameter based on the at least one discarded consecutive data packet.

11. The method according to claim 10, wherein a sequence number corresponding to the at least one consecutive data packet has a maximum value being a fourth sequence number, and a minimum value being a fifth sequence number, and the fourth sequence number is greater than or equal to the fifth sequence number; and the updating the first discard status parameter and the second discard status parameter based on the at least one discarded consecutive data packet comprises:
corresponding to that the fourth sequence number is less than the first discard status parameter, updating the first discard status parameter to the fifth sequence number, and updating the second discard status parameter to the fourth sequence number; or
corresponding to that the fourth sequence number is greater than the second discard status parameter and the fifth sequence number is greater than or equal to the first discard status parameter and less than or equal to the second discard status parameter, updating the second discard status parameter to the fourth sequence number; or
corresponding to that the fourth sequence number is less than or equal to the second discard status parameter and greater than or equal to the first status parameter and the fifth sequence number is less than the first discard status parameter, updating the first discard status parameter to the fifth sequence number; or
corresponding to that the fourth sequence number is less than or equal to the second discard status parameter and greater than or equal to the first status parameter and the fifth sequence number is less than the first discard status parameter, updating the first discard status parameter to the fifth sequence number; or
corresponding to that the fourth sequence number and the fifth sequence number are between the first discard status parameter and the second discard status parameter or the fifth sequence number is greater than the second discard status parameter, skipping updating the first discard status parameter and the second discard status parameter.

12. The method according to any one of claims 1 to 11, wherein the method further comprises:
sending discard information to a receive end, wherein the discard information is used to indicate the discarded data packet.

13. The method according to claim 1, wherein the method further comprises:
receiving first indication information; and
discarding the discarded data packet in response to the first indication information.

14. A communication method, applied to a receive end and comprising:
determining a discarded data packet; and
updating a transmission status parameter of the receive end based on the discarded data packet.

15. The method according to claim 14, wherein the transmission status parameter of the receive end comprises at least one of the following parameters:
a second status parameter, wherein the second status parameter is used to indicate a sequence number of a next data packet of a data packet that is latest completely received by the receive end in sequence;
a third status parameter, wherein the third status parameter is used to indicate a sequence number of a next data packet of a data packet latest completely received by the receive end; or
a fourth status parameter, wherein the fourth status parameter is used to indicate a next sequence number of a sequence number corresponding to a data packet that triggers a reassembly timer.

16. The method according to claim 15, wherein the updating the transmission status parameter of the receive end based on the discarded data packet comprises:
when the discarded data packet meets a third condition, updating the transmission status parameter of the receive end based on the discarded data packet; and
the third condition comprises:
the discarded data packet is in the receiving window; or
a sequence number of the discarded data packet is between the sequence number indicated by the second status parameter and a largest sequence number among those of data packets that have been completely received by the receive end; or
the sequence number of the discarded data packet is between the sequence number indicated by the second status parameter and the sequence number indicated by the third status parameter; or
the sequence number of the discarded data packet is between the sequence number indicated by the second status parameter and the sequence number indicated by the fourth status parameter; or
the sequence number of the discarded data packet is greater than or equal to the sequence number indicated by the second status parameter; or
the sequence number of the discarded data packet is less than or equal to the largest sequence number among those of the data packets that have been completely received by the receive end; or
the sequence number of the discarded data packet is less than or equal to the sequence number indicated by the third status parameter; or
the sequence number of the discarded data packet is less than or equal to the sequence number indicated by the fourth status parameter.

17. The method according to claim 15, wherein the updating the transmission status parameter of the receive end based on the discarded data packet comprises:
when a third data packet with a sequence number the same as the sequence number indicated by the second status parameter exists in the discarded data packet, updating the second status parameter to a seventh sequence number after a sixth sequence number of the third data packet; or
corresponding to that no data packet with a sequence number the same as the sequence number indicated by the second status parameter exists in the discarded data packet, when the second status parameter is updated to the sixth sequence number, updating the second status parameter to the seventh sequence number.

18. The method according to claim 16, wherein the updating the transmission status parameter of the receive end based on the discarded data packet comprises:
when the sequence number indicated by the second status parameter is the same as a sixth sequence number of a third data packet in the discarded data packet, updating the second status parameter to a seventh sequence number after the sixth sequence number, wherein the third data packet is a data packet with a smallest sequence number in the discarded data packet; or
corresponding to that the sequence number indicated by the second status parameter is different from the sixth sequence number, when the second status parameter is updated to the sixth sequence number, updating the second status parameter to the seventh sequence number.

19. The method according to claim 17 or 18, wherein the discarded data packet comprises a second consecutive data packet, the second consecutive data packet comprises the third data packet, and the seventh sequence number is a sequence number of a fourth data packet after the second consecutive data packet.

20. The method according to claim 19, wherein the fourth data packet is a next data packet of the second consecutive data packet, or a 1^{st} incompletely received data packet after the second consecutive data packet, or a 1^{st} data packet that is not completely received after the second consecutive data packet and that is not in the discarded data packet.

21. The method according to claim 17 or 18, wherein the discarded data packet comprises a second consecutive data packet, and the second consecutive data packet comprises the third data packet; and the updating the transmission status parameter of the receive end based on the discarded data packet further comprises:
when a sequence number of a last piece of data in the second consecutive data packet is greater than or equal to the sequence number indicated by the third status parameter, updating the third status parameter to an eighth sequence number; and/or
when the sequence number of the last piece of data in the second consecutive data packet is greater than or equal to the sequence number corresponding to the fourth status parameter, updating the fourth status parameter to a next sequence number of the largest sequence number among those of the data packets that have been completely received by the receive end, wherein
the eighth sequence number is a sequence number of a fifth data packet after the second consecutive data packet, and the fifth data packet is a next data packet of the second consecutive data packet, or a 1^{st} incompletely received data packet after the second consecutive data packet.

22. The method according to claim 19, wherein the method further comprises:
sending a status report to a transmit end, wherein the status report is used to indicate that all data packets of the second consecutive data packet have been completely received by the receive end.

23. The method according to claim 22, wherein the sending the report to the transmit end comprises:
when an acknowledgment feedback ACK of one or more data packets in the second consecutive data packet is not sent to the transmit end, sending the status report to the transmit end, wherein the status report comprises the ACK of the one or more data packets.

24. The method according to claim 19, wherein the sixth sequence number and a ninth sequence number corresponding to a last data packet in the second consecutive data packet are maintained based on a third discard status parameter and a fourth discard status parameter respectively.

25. The method according to claim 24, wherein the method further comprises:
determining at least one discarded consecutive data packet, and updating the third discard status parameter and the fourth discard status parameter based on the at least one discarded consecutive data packet.

26. The method according to claim 25, wherein a sequence number corresponding to the at least one consecutive data packet has a maximum value being a tenth sequence number, and a minimum value being an eleventh sequence number, and the tenth sequence number is greater than or equal to the eleventh sequence number; and the updating the third discard status parameter and the fourth discard status parameter based on the at least one discarded consecutive data packet comprises:
corresponding to that the tenth sequence number is less than the third discard status parameter, updating the third discard status parameter to the eleventh sequence number, and updating the fourth discard status parameter to the tenth sequence number; or
corresponding to that the tenth sequence number is greater than the fourth discard status parameter and the eleventh sequence number is greater than or equal to the third discard status parameter and less than or equal to the discard status parameter, updating the fourth discard status parameter to the tenth sequence number; or
corresponding to that the tenth sequence number is less than or equal to the fourth discard status parameter and greater than or equal to the third status parameter and the eleventh sequence number is less than the third discard status parameter, updating the third discard status parameter to the eleventh sequence number; or
corresponding to that the tenth sequence number is less than or equal to the fourth discard status parameter and greater than or equal to the third status parameter and the eleventh sequence number is less than the third discard status parameter, updating the third discard status parameter to the eleventh sequence number; or
corresponding to that the tenth sequence number and the eleventh sequence number are between the third discard status parameter and the fourth discard status parameter or the eleventh sequence number is greater than the fourth discard status parameter, skipping updating the third discard status parameter and the fourth discard status parameter.

27. The method according to any one of claims 15 to 26, wherein the receive end comprises a radio link control layer, and the radio link control layer performs:
determining a discarded data packet; and
updating the transmission status parameter of the receive end based on the discarded data packet.

28. The method according to claim 14, wherein the transmission status parameter of the receive end comprises at least one of the following parameters:
a fifth status parameter, wherein the fifth status parameter is used to indicate a COUNT value corresponding to a 1^{st} data packet that is not submitted by a packet data convergence protocol PDCP layer of the receive end to an upper layer of the PDCP layer; and
a sixth status parameter, wherein the sixth status parameter is used to indicate a COUNT value corresponding to a data packet that triggers a reassembly timer of the PDCP layer.

29. The method according to claim 28, wherein the updating the transmission status parameter of the receive end based on the discarded data packet comprises:
when the discarded data packet meets a fourth condition, updating the transmission status parameter of the receive end based on the discarded data packet; and the fourth condition comprises:
a COUNT value corresponding to the discarded data packet is between the COUNT value indicated by the fifth status parameter and a COUNT value corresponding to a next data packet received at the PDCP layer; or
the COUNT value corresponding to the discarded data packet is greater than or equal to the COUNT value indicated by the fifth status parameter; or
the COUNT value corresponding to the discarded data packet is less than or equal to the COUNT value corresponding to the next data packet received at the PDCP layer.

30. The method according to claim 28, wherein the updating the transmission status parameter of the receive end based on the discarded data packet comprises:
when a sixth data packet with a COUNT value the same as the COUNT value indicated by the fifth status parameter exists in the discarded data packet, updating the fifth status parameter to a second COUNT value after a first COUNT value of the sixth data packet; or
corresponding to that no data packet with a COUNT value the same as the COUNT value indicated by the fifth status parameter exists in the discarded data packet, when the fifth status parameter is updated to the first COUNT value, updating the fifth status parameter to the second COUNT value.

31. The method according to claim 29, wherein the updating the transmission status parameter of the receive end based on the discarded data packet comprises:
when the COUNT value indicated by the fifth status parameter is the same as a first COUNT value of a sixth data packet in the discarded data packets, updating the fifth status parameter to a second COUNT value after the first COUNT value, wherein the sixth data packet is a data packet with a smallest COUNT value in the discarded data packet; or
correspondingly to that the COUNT value indicated by the fifth status parameter is different from the first COUNT value, when the fifth status parameter is updated to the first COUNT value, updating the fifth status parameter to the second COUNT value.

32. The method according to claim 30 or 31, wherein the discarded data packet comprises third consecutive data packet, the third consecutive data packet comprises the sixth data packet, and the second COUNT value is a COUNT value of a seventh data packet after the third consecutive data packet.

33. The method according to claim 32, wherein the seventh data packet is a next data packet of the third consecutive data packet, or a 1^{st} data packet that is after the third consecutive data packet and that is not submitted to the upper layer of the PDCP layer, or a 1^{st} data packet that is after the third consecutive data packet and that is not submitted to the upper layer of the PDCP layer and is not in the discarded data packet.

34. The method according to claim 30 or 31, wherein the updating the transmission status parameter of the receive end based on the discarded data packet further comprises:
when the second COUNT value is greater than the COUNT value indicated by the sixth status parameter, updating the sixth status parameter to the COUNT value corresponding to the next data packet received at the PDCP layer; and/or
starting a reassembly timer of the PDCP layer.

35. The method according to claim 32, wherein the first COUNT value and a third COUNT value corresponding to a last data packet in the third consecutive data packet are maintained based on a fifth discard status parameter and a sixth discard status parameter respectively.

36. The method according to claim 35, wherein the method further comprises:
determining at least one discarded consecutive data packet, wherein a COUNT value corresponding to the at least one consecutive data packet has a maximum value being a fourth COUNT value, and a minimum value being a fifth COUNT value, and the fourth COUNT value is greater than or equal to the fifth COUNT value; and
corresponding to that the fourth COUNT value is less than the fifth discarding status parameter, updating the fifth discarding status parameter to the fifth COUNT value, and updating the sixth discarding status parameter to the fourth COUNT value; or
corresponding to that the fourth COUNT value is greater than the fifth discard status parameter, and the fifth COUNT value is greater than or equal to the fifth discard status parameter and less than or equal to the sixth discard status parameter, updating the sixth discard status parameter to the fourth COUNT value; or
corresponding to that the fourth COUNT value is less than or equal to the sixth discard status parameter and greater than or equal to the fifth status parameter and the fifth COUNT value is less than the fifth discard status parameter, updating the fifth discard status parameter to the fifth COUNT value; or
corresponding to that the fourth COUNT value is less than or equal to the sixth discard status parameter and greater than or equal to the fifth status parameter and the fifth COUNT value is less than the fifth discard status parameter, updating the fifth discard status parameter to the fifth COUNT value; or
corresponding to that the fourth COUNT value and the fifth COUNT value are between the fifth discard status parameter and the sixth discard status parameter or the fifth COUNT value is greater than the sixth discard status parameter, skipping updating the fifth discard status parameter and the sixth discard status parameter.

37. The method according to claim 28, wherein the PDCP layer performs:
determining a discarded data packet; and
updating the transmission status parameter of the receive end based on the discarded data packet.

38. The method according to claim 14, wherein the determining the to-be-discarded data packet comprises:
receiving discard information indicating the discarded data packet.

39. A transmit end device, comprising:
one or more processors; and
one or more memories, wherein
the one or more memories store one or more computer programs, the one or more computer programs comprise instructions, and when the instructions are executed by the one or more processors, the transmit end device is enabled to implement the method according to any one of claims 1 to 13.

40. A receive end device, comprising:
one or more processors;
one or more memories; and
the one or more memories store one or more computer programs, the one or more computer programs comprise instructions, and when the instructions are executed by the one or more processors, the receive end device is enabled to implement the method according to any one of claims 14 to 38.

41. A communication system, wherein the communication system comprises:
the transmit end device according to claim 39 and the receive end device according to claim 40.

42. A computer-readable storage medium, wherein the computer-readable storage medium stores computer-executable program instructions, and when the computer-executable program instructions are run on a computer, the computer is enabled to implement the method according to any one of claims 1 to 13 or the method according to any one of claims 14 to 38.

43. A computer program product, wherein the computer program product comprises computer program code, and when the computer program code is run on a computer, the computer is enabled to implement the method according to any one of claims 1 to 13 or the method according to any one of claims 14 to 38.
